# EUROPEAN PATENT SPECIFICATION

(11) **EP 1 597 074 B1**
(45) Date of publication and mention of the grant of the patent: **24.06.2009**
(21) Application number: 04715016.4
(22) Date of filing: 26.02.2004
(51) Int. Cl.: C09J 7/02

(54) **METHOD AND DEVICE FOR MAKING A MAGNETICALLY MOUNTABLE SUBSTRATE CONSTRUCTION FROM A SELECTED SUBSTRATE**
VERFAHREN UND VORRICHTUNG ZUR HERSTELLUNG EINES MAGNETISCH ANBRINGBAREN GEGENSTANDES AUS EINEM VORBESTIMMTEM SUBSTRAT
PROCEDE ET DISPOSITIF PERMETTANT DE FABRIQUER UNE CONSTRUCTION DE SUBSTRAT A MONTAGE MAGNETIQUE A PARTIR D'UN SUBSTRAT CHOISI

(30) Priority: 26.02.2003 US 372807
(43) Date of publication of application: 23.11.2005
(73) Proprietor: Xyron, Inc., Scottsdale, Arizona 85260 (US)
(72) Inventor: RIVERA, Raymond, R., Scottsdale, AZ 85259 (US); NEUBURGER, Carl, D., Scottsdale, AZ 85260 (US)
(74) Representative: Daniels, Jeffrey Nicholas
(86) International application number: PCT/US2004/005639
(87) International publication number: WO 2004/076178

(56) References cited:
- WO-A-01/14486
- WO-A-01/78983

## Description

### Field of the Invention

The present invention relates to a pressure-sensitive magnetic sheet material and to a method and device for making a magnetically mountable substrate construction from a selected substrate for magnetic mounting to a structure including magnetizable material.

### Background of the Invention

The use of magnets for mounting substrates to structures including magnetizable material is well-known. Probably the most widely known use of such magnets are refrigerator magnet constructions which are used to support papers and the like on the steel door of a refrigerator. Oftentimes, these magnet constructions are pre-made with a decorative front to enhance their appearance on the refrigerator door. The backing is formed from a rigid or flexible material that includes permanently magnetized material therein. The permanently magnetized material enables the magnet construction to be magnetically mounted to the steel refrigerator door because the steel itself is a temporarily magnetizable material.

Oftentimes, persons in the arts and crafts field desire to make their own magnets. That is, they desire to make a magnet construction with a decorative front of their own choosing. For example, a person may desire to make a magnet construction with the front being a picture of their children or pet. Such a "homemade" magnet construction has a personalized feel that cannot be obtained by purchasing a pre-made magnet construction.

To this end, there have been provided devices that enable such persons to make magnets with decorative fronts of their own selection. One example of such a device comes in the form of pre-made sheets of magnet substrate that includes permanently magnetized material. These sheets are sold in a flat form and are coated with a layer of pressure-sensitive adhesive, which is covered by a silicone coated release liner to protect the adhesive. To use the sheet, the user simply peels off the flexible release liner and discards the same; engages a selected substrate (such as a photograph) with the adhesive layer and applies sufficient pressure thereto to adhesively bond the selected substrate to the magnet substrate; and then cuts or trims the magnet substrate around the periphery of the selected substrate. The resulting magnetically mountable substrate construction can then be mounted to a refrigerator door or some other structure including magnetizable material. While this type of device has seen some commercial success, it is not particularly suitable for repeated production of a number of these home-made magnet constructions.

One device known in the art provides for more efficient production of such magnetically mountable substrate constructions. This device comprises a cartridge having a roll of flexible magnet substrate with a layer of adhesive on one side thereof wound about a core and a roll of flexible protecting substrate wound about another core. The cores are rotatably mounted in a cartridge body structure, which removably mounts to an apparatus constructed in accordance with the teachings of U.S. Patent No. 5,580,417 and the further patents/applications that claim priority thereto.

To use this cartridge-type device, the cartridge is removably mounted to the apparatus and the lead ends of the substrates are fed in between the cooperating pressure applying structures of the apparatus, which are usually in the form of counter-rotating nip rollers. The user can then feed the selected substrate into the cooperating pressure applying structures between the lead end portions of the magnet and protecting substrates and then operate the apparatus to affect rotation of the cooperating structures. As the cooperating structures rotate, they apply pressure to the substrates to cause the adhesive to adhesively bond the selected substrate to the magnet substrate and then they discharge the substrates outwardly therefrom. The user can then cut off the discharged substrates and trim around the periphery of the selected substrate. The protecting substrate prevents any adhesive on the magnet substrate from contacting the cooperating structures and sticking thereto. The protecting layer is usually transparent and can also be left over the selected substrate after trimming to protect the selected substrate in a fashion similar to a laminated document. This is done by leaving a marginal portion of the magnet substrate exposed during trimming so that the trimmed protecting substrate can remain bonded to the adhesive on that marginal portion.

One drawback to this device is that a release liner must be wound up along with the magnet substrate to prevent the adhesive from bonding to the opposite surface of the release liner. As the magnet substrate is unwound, the flexible magnet substrate is unwound therewith and pays out on the side opposite the adhesive to prevent it from interfering with the magnet making operation. This release liner introduces a significant cost that it would be greatly desirable to eliminate. Specifically, the release liner not only introduces an additional material cost that does not enhance the user's end product, it also introduces additional steps and equipment that increase the costs of making the cartridge. Specifically, to make the roll on which the magnet substrate is wound, the release liner must be supported on a spool separate from the spool on which the magnet substrate is supported. Then the magnet substrate is unwound, adhesive is applied to the magnet substrate, and then the magnet substrate and the release liner are wound together onto a core for installation into the cartridge.
WO01/78983 discloses a method and device for making a magnetically mountable substrate construction from a selected substrate for magnetic mounting to a structure including a magnetizable material, the substrate construction comprising the selected substrate, a carrier portion formed from a flexible magnetic substrate, and pressure sensitive adhesive bonding the selected substrate to the carrier portion.

Consequently, there exists a need in the art for a less expensive way by which home-made magnetically mountable substrate construction can be made.

### Summary of the Invention

To meet the above-described need, the present invention provides a pressure sensitive adhesive magnetic sheet material, comprising:
a flexible magnetic substrate having a first major surface and a second major surface,
a pressure sensitive adhesive layer on the first major surface; and
a release layer on the second major surface;
wherein the flexible magnetic substrate is wound into a roll such that the adhesive layer directly engages the release layer;
wherein the release layer is a cured mixture comprising:
(i) a silicone release agent;
(ii) an adhesion promoter promoting the adherence of the release layer to the second major surface of the magnetic substrate; and
(iii) an adhesion enhancer to strengthen cohesion of the release layer, wherein the adhesion enhancer comprises a mixture of methacrylate acid ester and trifunctional acid ester.
Provided is a device for making a magnetically mounting substrate construction a selected substrate for magnetic mounting to a structure including magnetizable material. The device comprises a flexible magnet substrate having an adhesive carrying surface and a release surface opposite the carrying surface. The flexible magnet substrate includes permanently magnetized material which enables the flexible magnet substrate to be magnetically mounted to structures including magnetizable material. A layer of pressure-sensitive adhesive is provided on the adhesive carrying surface of the flexible magnet substrate. The flexible magnet substrate is wound into a roll such that the layer of pressure-sensitive adhesive directly engages the release surface of the flexible magnet substrate. The adhesive carrying surface has a greater affinity for adhesive bonding than the release surface so as to enable the device to be used to make the magnetically mountable substrate construction comprising the selected substrate, a carrier portion of the flexible magnet substrate, and a portion of the adhesive layer adhesively bonding the selected substrate to the portion of the flexible magnet substrate by (a) unwinding a lead end portion of the flexible magnet substrate with the adhesive remaining bonded to the adhesive carrying surface of the unwound lead end portion, (b) engaging the selected substrate with the adhesive on the unwound lead end portion and applying pressure to adhesively bond the selected substrate to the unwound lead end portion, and (c) cutting the unwound lead end portion so as to form the carrier portion.

Another aspect of the invention provides a method for making a pressure-sensitive magnetic material, the method comprising:
applying a pressure-sensitive adhesive layer on a first major surface of a flexible magnetic substrate;
coating a release layer onto a second major surface of the flexible magnetic substrate;
curing the release layer; and
winding the flexible magnetic substrate into a roll such that the adhesive layer directly engages the release layer;
wherein the release layer is a mixture comprising:
(i) a silicone release agent;
(ii) an adhesion promoter promoting the adherence of the release layer to the second major surface of the magnetic substrate; and
(iii) an adhesion enhancer to strengthen cohesion of the release layer,
wherein the adhesion enhancer comprises a mixture of methacrylate acid ester and trifunctional acid ester.
Provided is a method for making a magnetically mountable adhesive construction from a selected substrate for magnetic mounting to a structure including magnetizable material, the substrate construction comprising the selected substrate, a carrier portion formed from a flexible magnet substrate including permanently magnetized material, and adhesive adhesively bonding the selected substrate to the carrier portion. The method comprises:

providing a device comprising:

a flexible magnet substrate having an adhesive carrying surface and a release surface opposite the carrying surface, the flexible magnet substrate including permanently magnetized material which enables the flexible magnet substrate to be magnetically mounted to structures including magnetizable material;

a layer of pressure-sensitive adhesive provided on the adhesive carrying surface of the flexible magnet substrate;

the flexible magnet substrate being wound into a roll such that the pressure-sensitive adhesive layer directly engages the release surface of the flexible magnet substrate;

the adhesive carrying surface having a greater affinity for adhesive bonding than the release surface to enable a lead end portion of the flexible magnet substrate to be unwound with the adhesive remaining bonded to the adhesive carrying surface of the unwound lead end portion;

unwinding the lead end portion of the flexible magnet substrate with the adhesive remaining bonded to the adhesive carrying surface of the unwound lead end portion;

engaging the selected substrate with the adhesive on the unwound lead end portion of the flexible magnet substrate;

applying pressure to adhesively bond the selected substrate to the unwound lead end portion; and

cutting the unwound lead end portion of the flexible magnet substrate so as to separate the carrier portion.

Other objects, features, and advantages of the present invention will become apparent from the following detailed description, the accompanying drawings, and the appended claims.

### Brief Description of the Drawings

Figure 1 is a cross-sectional view of a roll made in accordance with the principles of the present invention;

Figure 2 is a perspective view of a selected substrate mounted onto a lead end portion of the roll in Figure 1;

Figure 3 is a perspective view similar to Figure 2, but showing cutting the unwound lead end portion of the roll in Figure 1;

Figure 4 is a side view of the magnetically mountable substrate construction;

Figure 5 is a perspective view of a processing apparatus with a cartridge body structure constructed and arranged to mount thereto;

Figure 6 is a perspective view of the apparatus with the cartridge body structure removably mounted thereto to affect a processing operation and showing the selected substrate inserted between the flexible magnet substrate and a flexible protecting substrate;

Figure 7 is a perspective view of the apparatus with individual feed rolls mounted thereto; and

Figure 8 is a perspective exploded view of one end of the core having a pre-tensioning brake thereon.

Figure 9 is a flow diagram of a schematic representation of an embodiment according to the invention of a process for making a continuous length of pressure sensitive adhesive magnetic sheet.

Figure 10 is a flow chart of an exemplary process of making pressure sensitive adhesive magnetic sheet according to an embodiment of the invention.

Figure 11 is a plot of peel adhesion data measured during an aging study as described in the example appearing hereinafter.

### Detailed Description of the Invention

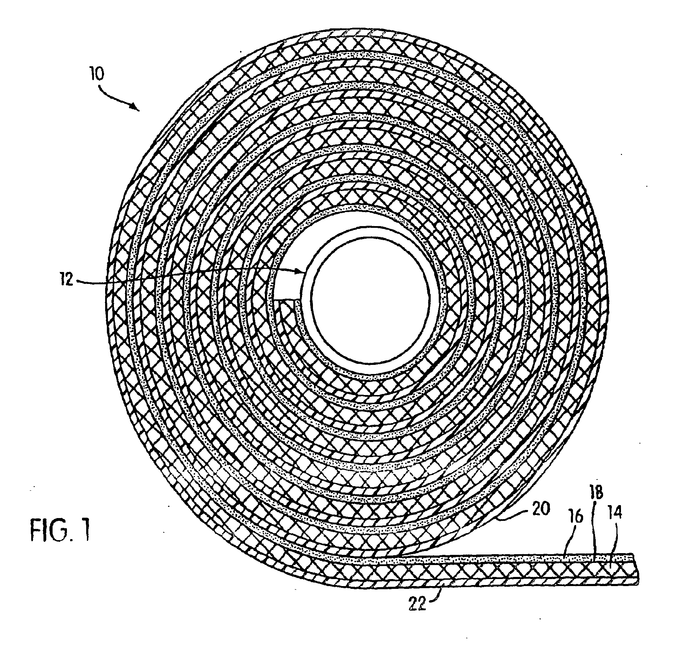

Fig. 1 is a cross sectional view of a device in the form of a roll, generally indicated at 10, embodying the principles of the present invention. The scaling of the cross-sectional view is exaggerated in order to more clearly illustrate the principles of the present invention and the arrangement of the substrates and layers. The roll 10 comprises a core 12, a flexible magnet substrate, generally indicated at 14, and a layer of pressure-sensitive adhesive, generally indicated at 16. The flexible magnet substrate 14 includes permanently magnetized material which enables the flexible magnet substrate to be magnetically mounted to structures including magnetizable material, such as steel or ferritic materials. The flexible magnet substrate 14 has an adhesive carrying surface 18 and a release surface 20 on opposite sides thereof. The layer of pressure-sensitive adhesive 16 is bonded to the adhesive carrying surface 18, which is preferably left uncoated prior to application of the adhesive, so that the entire magnet substrate 14 is covered. The pressure-sensitive adhesive 16 is formed from a suitable adhesive having relatively strong and durable bonding qualities suitable for extended periods of use, such as acrylic-based emulsion, a rubber based adhesive or any other suitable adhesive.

The core 12 may be made from paper, cardboard, plastic, or any other suitable material. Also, the core 12 may take any cross-sectional shape or configuration. In fact, it is within the scope of the invention to eliminate the core in certain, situations and simply wind the magnet 14 about itself.

The flexible magnet substrate 14 is formed from a flexible matrix material such as extruded and cured rubber or the like, having a plurality of rare earth particles embedded therein via the extrusion process. After the magnet substrate 14 has been cured, it is then subject to a strong magnetic field to permanently magnetize the rare earth particles thereof. Ferritic particles may be used in place of rare earth.

The release surface 20 of the flexible magnetic substrate 14 is provided by a layer of release material 22 which has a lower affinity for adhesive bonding than the adhesive carrying surface 18. The release material 22 is a low friction material comprising silicone, to provide the release surface 20 with its relatively lower affinity for adhesive bonding than the adhesive carrying surface 18. Alternatively, a low fraction material may be co-extruded with the matrix material (with the rare earth embedded therein). Thus, in a broad sense, the magnet substrate 14 can be considered to have a release surface 20 which is provided by either a low friction coating applied to the substrate 14 or low friction material extruded as part of the substrate 14 itself.

The flexible magnetic substrate 14 with the pressure-sensitive adhesive 16 thereon is wound about the core 12 such that the layer of adhesive 16 directly engages the release surface 20 of the substrate 14 to protect the adhesive layer 16 from exposure and accidental contact.

Because the adhesive carrying surface 18 has a greater affinity for adhesive bonding than the release surface 20, the adhesive 16 can be moved away from the release surface 20 without removing the adhesive 16 from the carrying surface 18 during unwinding of a lead end portion 24 of the substrate 14.

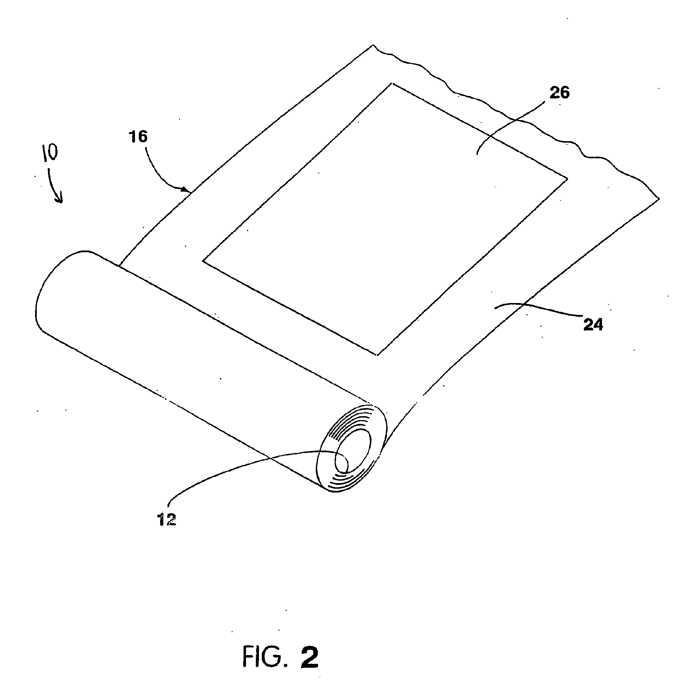

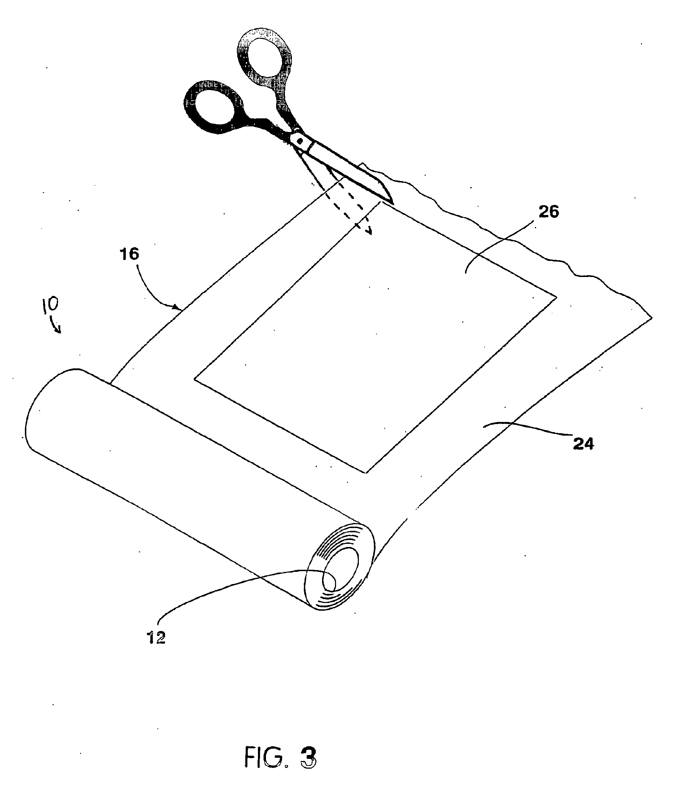

Figures 2-4 show sequential acts of a roll 10 designed in accordance with the principles of the present invention being used to make a magnetic mountable substrate construction for magnetic mounting to a structure including magnetizable material. A lead end portion 24 of the flexible magnet substrate 14 is unwound from the core 12 such that the selected substrate 26 may be engaged with the layer of adhesive 16 on the unwound lead end portion 24. Sufficient pressure is then applied to the selected substrate 26 to cause the adhesive 16 to adhesively bond the selected substrate 26 to the unwound lead end portion 24. As shown in Figure 3, the flexible magnet substrate 14 has the selected substrate 26 bonded thereto may be cut by a user about the periphery of the selected substrate 26 so as to separate the completed magnetically mountable substrate construction. Alternatively, the magnet substrate 14 may be cut to the desired size before engaging the selected substrate 26 with the adhesive 16.

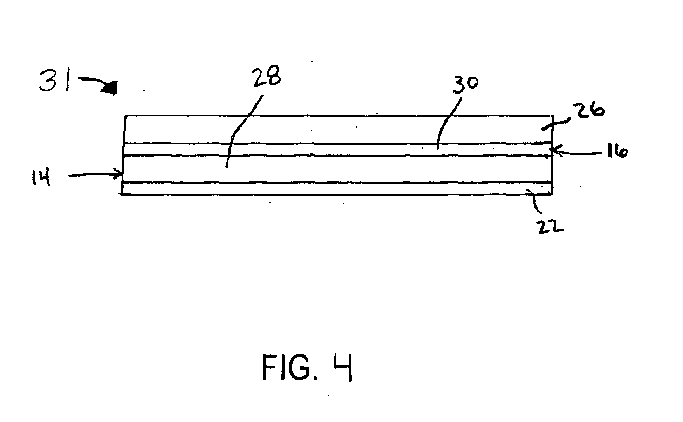

Fig. 4 shows a side view of the magnetically mountable substrate construction 31. The scaling of the elements shown in Fig. 4 is greatly exaggerated for clarity purposes. The selected substrate 26 is adhesively bonded by a portion 30 of the adhesive layer 16 to a carrier portion 28 of the flexible magnetic substrate 14. The adhesive 16 covers the entire backside of the selected substrate 26.

In the Figures, the selected substrate 26 illustrated may be a photograph. However, it is contemplated that a wide variety of selected substrates may be used with the device 10 of the present invention. For example, it may be desirable to perform a magnetic mounting operation on business cards, greeting cards, holiday decorations, school projects or pictures, arts and crafts projects, etc.

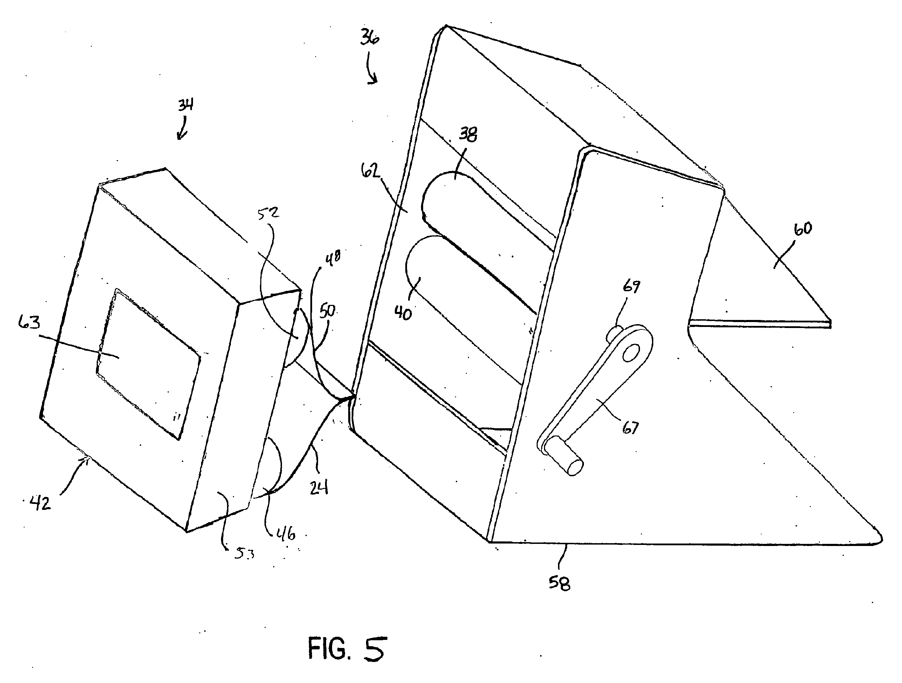

Fig. 5 shows a processing apparatus 36 that can be used for more efficient production of magnetically mountable adhesive constructions. In Fig. 5, the device of this aspect of the invention comprises a removable cartridge, generally indicated at 34, that is constructed and arranged to be removably mounted to the frame of the processing apparatus 36. The processing apparatus 36 includes cooperating pressure applying structures 38, 40 operable to apply pressure to substrates fed therebetween. In the illustrated embodiment, the cooperating structures 38, 40 are a pair of counter-rotating nip rollers, but any suitable structural arrangement for applying pressure to substrates may be used.

The cartridge 34 comprises a cartridge body 42, the core 12, and a second core 44. As described above, the flexible magnetic substrate 14 having the release material 22 coated thereon and the pressure-sensitive adhesive 16 adhered thereto is wound about the core 12 to form a lower supply roll 46. A flexible protecting substrate 48 having a lead end portion 50 is wound about the second core 44 to form an upper supply roll 52. Preferably, the protecting substrate 48 is a transparent plastic sheet that has an affinity for bonding with the adhesive 16. However, any type of material which will protect the selected substrate, such as various synthetic materials or the like, may be used in place of the transparent plastic sheet. Alternatively, the protecting substrate 48 may be release coated so that it does not adhere to the adhesive 16 and is used simply to protect the adhesive during making of the magnetically mountable substrate construction.

The supply rolls 46, 52 extend transversely between the opposing side walls, one of which is shown at 53 of the cartridge body 42. The supply rolls 46, 52 are rotatably mounted to the cartridge body 42, which enables the lead end portions 24, 50 of the respective substrates of each core 12, 44 to be unwound as shown in Fig. 5. and then fed in between the pressure applying structures 38, 40.

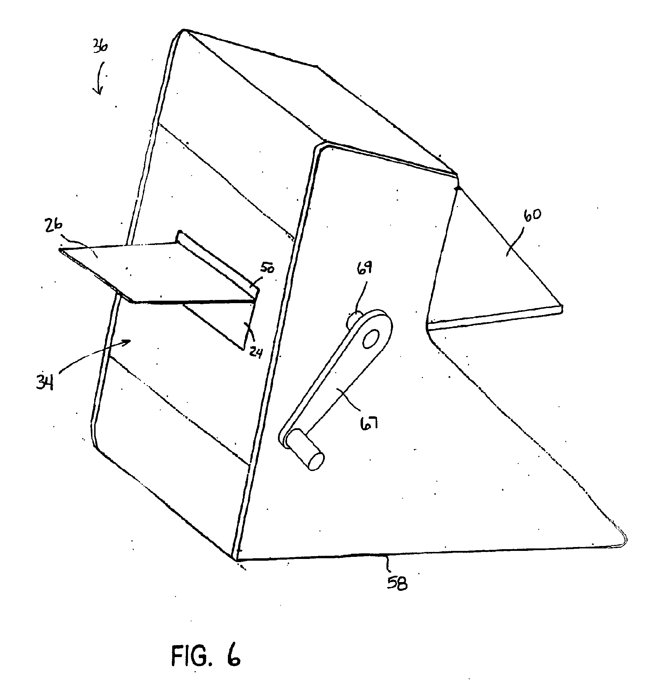

Fig. 6 illustrates a perspective view of the processing apparatus 36 with the removable cartridge 34 of the present invention removably mounted thereto. It is to be understood that the removably mounted cartridge 34 may be used with any type of processing apparatus and its use is not limited to the examples mentioned or discussed in the present application. The cartridge 34 may be used in conjunction with any of the adhesive transfer and/or laminating machines disclosed in U.S. Patents 5,584,962 and 5,580,417 and 5,788,806, U.S. Patent Application of Paque, Serial No. 09/189,273, U.S. Patent Application of Velasquez, Serial No. 09/691,042, U.S. Patent Application of Miller, Serial No, 60/236,750, and U.S. Provisional Application of Lemens, Serial No. No. 601248,217.

The apparatus 36 comprises a frame 58, a feed tray (not shown), an exit tray 60 and an actuator 67 in the form of a crank handle. As previously stated and as best seen in the perspective view of Fig. 5, the apparatus 36 also comprises a pair of cooperating pressure applying structures 38, 40 and a cartridge-receiving opening 62 defined by the frame for removably mounting the cartridge 34.

The materials from the supply rolls 45, 52 are disposed adjacent and in contact with one another before insertion into the cooperating pressure applying structures 38, 40 of the apparatus 36. The removable cartridge body structure 34 is inserted into the cartridge receiving opening 62 of the apparatus 36 so that the supply rolls 38, 40 face inwardly with respect to the frame 58.

Figure 6 illustrates the cartridge body structure 34 removably mounted within the processing apparatus 36. Then, the selected substrate 26 may be inserted into a feeding opening 63 in the cartridge body structure 34 so as to pass between the lower and upper supply rolls 46, 52. The layer of pressure-sensitive adhesive 16 on the flexible magnet substrate 14 is brought into contact with one surface of the selected substrate 26 and the protecting substrate 48 contacts both the opposing surface of the selected substrate 26 and any excess adhesive exposed about the periphery of the selected substrate 26. Together the flexible magnet substrate 14, the protecting substrate 48 and the selected substrate 26 are advanced through the cooperating pressure applying structures 38, 40 of the apparatus 36, as shown in Figure 6. The actuator 67 is a crank handle having a shaft 69 extending inwardly through an opening in a side wall to the interior of the apparatus 36 and operatively connects the actuator 67 to the upper cooperating structure 38. As a result, manual rotation of the actuator 67 rotates the upper cooperating structure 38 causing the flexible magnet substrate 14, the selected substrate 26, and the protecting substrate 48 to be fed through the cooperating pressure applying structures 38, 40 with the structures 38, 40 applying pressure thereto.

As the flexible magnet substrate 14, the selected substrate 26, and the protecting substrate 48 are fed through the cooperating pressure applying structures 38, 40, the cooperating pressure applying structures 38, 40 apply pressure to these substrates so a portion of the layer of pressure-sensitive adhesive 16 is adequately adhered to the selected substrate 26 and so that any excess portions of adhesive 16 bond to the protecting substrate 48, if the substrate 48 has an affinity for adhesive bonding. The selected substrate 26, along with the flexible magnet substrate 14 and protecting substrate 48 on the opposing sides thereof, is then discharged out the discharge side of the cooperating pressure applying structures 38, 40 onto the exit tray 60.

After the selected substrate 26, the flexible magnet substrate 14 and protecting substrate 48 have been discharged, the user is able to cut the flexible magnet substrate 14 around the periphery of the selected substrate 26 to separate the completed magnetically mountable adhesive construction 31, as shown in Fig. 4.

The protecting substrate 48 may simply serve to cover the excess adhesive 16 exposed about the periphery of the selected substrate 26 to protect the same from sticking to the pressure applying structures 38, 40 of the apparatus 36. In one embodiment, the surface of the protecting substrate 48 may be release coated to prevent the excess adhesive from sticking thereto. In that event, the protecting substrate 48 is simply peeled away and discarded after being discharged from the apparatus 36. In another embodiment, the surface of the protecting substrate may have an affinity for adhesive bonding and thus any excess adhesive exposed around the periphery of the selected substrate 26 will adhere thereto. In that event, the protecting substrate 48 can be left over the selected substrate 26 and the cutting of the magnet substrate 14 can be spaced from the periphery of the selected substrate, thus leaving a marginal portion of the protecting substrate 48 adhered to a marginal portion of the magnet substrate 14. The protecting substrate should be transparent so that the selected substrate 26 can be viewed. In this arrangement, the protecting substrate 48 protects the selected substrate 26 in much the same fashion as a laminated document. Alternatively, the surface of the protecting substrate 48 that contacts this excess adhesive may have a greater affinity for adhesive bonding than the adhesive carrying surface 18 of the magnet substrate 14. In this arrangement, the excess adhesive will stay on the protecting substrate 48 as it is peeled away from the selected substrate 26, thus stripping the excess adhesive off the magnet substrate 14 for easier handling and subsequent cutting.

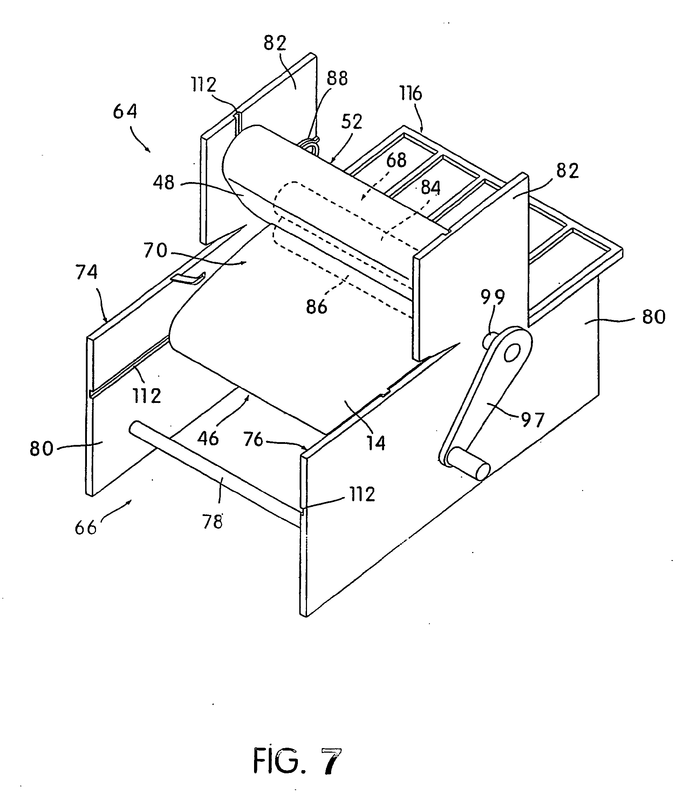

Fig. 7 shows a second embodiment of a processing apparatus with individual feed rolls mounted thereto used to provide more efficient production of such magnetically mountable adhesive constructions. As best shown, a processing assembly, generally indicated at 64, comprises a frame 66, that supports a master processing assembly, generally indicated at 68, a cartridgeless feed roll assembly, generally indicated at 70, and an actuator in the form of a crank handle, generally indicated at 97.

The frame 66 includes a pair of molded plastic side walls 74, 76 disposed parallel to one another in spaced relationship and extending upward in a generally vertical direction. The vertical side walls 74, 76 are secured in spaced relation by a pair of transversely extending spacer rods, one of which is indicated at 78. On the interior of each side wall 74, 76 is an upwardly facing U-shaped receiving slot (not shown) extending from a lower side wall portion 80 to an upper side wall portion 82.

The master processing assembly 68 comprises a pair of cooperating structures 84, 86, in the form of rotatable cooperating pressure applying structures extending transversely between the vertical side walls 74, 76, respectively. The upper cooperating structure 84 extends transversely between the upper side wall portions 82 and is rotatably retained in the U-shaped receiving slot. The lower cooperating structure 86 extends transversely between the lower side wall portions 80 and is rotatably retained below the upper cooperating structure 84 in the U-shaped receiving slot. By extending across the top of the U-shaped slots, the lower leg of each U-shaped spring 88 contacts the axle of the upper cooperating structure 84. The U-shaped spring 88 applies generally downward pressure to the axle to thereby retain the master processing assembly 68 in the upwardly facing U-shaped slots and forcing the peripheral surfaces of the cooperating pressure applying structures 84, 86 in cooperating rolling contact with one another. The upper and lower cooperating structures 84, 86 are preferably designed to engage each other in a rolling relation so as to define a nip area where the upper and lower cooperating structures 84, 86 meet and to exert pressure on substrates or films fed therebetween into the nip area.

The master processing assembly 68 may take any form suitable for applying pressure to substrate materials fed therebetween. For example, one of the rotatable cooperating pressure applying structures may be replaced by a fixed cooperating structure.

The cartridgeless feed roll assembly 70 includes an upper supply feed roll 52 and a lower supply feed roll 46 (also referred to as first and second) each containing stock materials wound around generally cylindrical feed roll cores 44, 12, respectively. The upper supply feed roll 52 contains the supply of protecting substrate 48 wound about its cylindrical core. The lower supply roll 46 contains the flexible magnet substrate 14 having the layer of adhesive 16 and the layer of release material 22 wound about its cylindrical core 12.

Each of the lower and upper feed rolls 46, 52 carry a pair of feed roll mounting structures 90, one on each opposite longitudinal end thereof These feed roll mounting structures 90 are constructed and arranged to mount the rolls 46, 52 to the frame of the processing apparatus 10, enabling the rolls 46, 52 to be rotated and for the lead end portions 24, 50 of the flexible magnet substrate 14 and the protecting substrate 48, respectively, to be unwound.

The lead end portions 24 and 50 of the stock materials are unwound and fed together between the cooperating structures of the processing assembly. The lead end portions of the stock materials being unwound may be bonded together to form a bonded lead end portion (not shown) prior to delivery to the end user. During operation, the protecting substrate 48 covers the pressure-sensitive adhesive 16 as the substrates are being fed through the pressure applying structures 84, 86 to prevent the adhesive 16 from contacting the cooperating structures 84, 86 and sticking thereto. The selected substrate 26 can then be fed between the lead end portions 24, 50 of the magnet substrate 14 and the protecting substrate 48, respectively.

The processing apparatus 64 also includes the actuator 97. The actuator 97 is a crank handle having a shaft 99 extending inwardly through an opening in side wall 76 to the interior of the apparatus 64 and is connected to the lower cooperating structure 86. Although not shown, the end of the shaft 99 is threaded and the lower cooperating structure 86 has a threaded bore (not shown) that receives the threaded end of the shaft 99, thereby operatively connecting the actuator 97 to the lower cooperating structure 86. As a result, manual rotation of the actuator 97 rotates the lower cooperating structure 86. Alternatively, a power-operated device may be used to affect rotation of the pressure applying structures.

As indicated above, the processing apparatus 64 may be used for multiple purposes including making magnetically mountable adhesive constructions. Also, the apparatus 64 may be any type of master processing apparatus capable of applying pressure or heat to substrates fed into the master processing assembly 68 thereof.

Preferably, the stock materials comprise a protecting substrate and a flexible magnet substrate having a layer of pressure-sensitive adhesive and a release material covering opposite sides thereof. It should be understood that the stock materials may comprise any flexible substrate material with at least one of the stock materials carrying a flexible magnet substrate having a layer of pressure-sensitive on one side thereof.

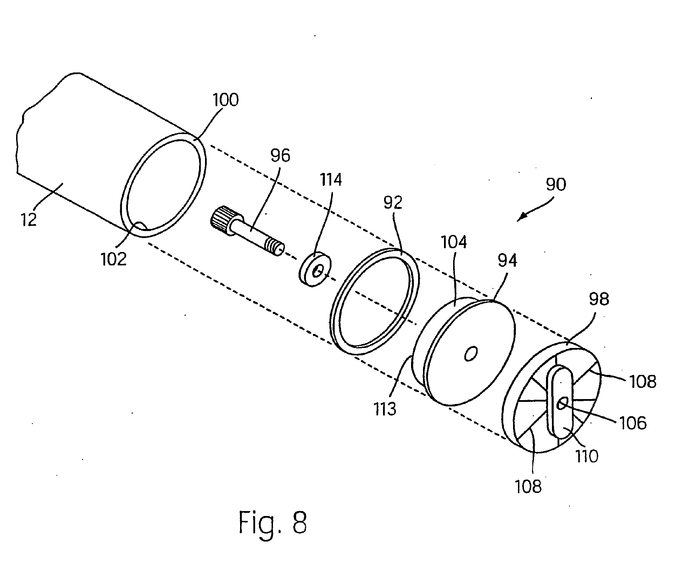

Fig. 8 shows a perspective exploded view of one end of the core 12 having one of the pair of mounting structures 90 in the form of a pre-tensioning brake thereon. The feed roll core 12 is preferably in the form of a cylinder made from plastic or cardboard, having an end face 100 and an interior wall 102. It should be noted that although core 12 is shown in Fig. 8, core 44 may be of similar or the same structure and could also be represented.

Each mounting structure 90 comprises an annular protecting ring 92, a generally cylindrical mounting cap 94, a fastener 96, and an end cap 98. The mounting cap 94 has an interior annular wall 104 and is preferably of molded plastic or other similar material. The interior annular wall 104 of the mounting cap 94 is configured to be positioned slightly inwardly of the end face 100 of the feed roll core 12 and may be adhesively secured in place to the interior wall 102 of the feed roll core 12 thereof. The mounting cap 94 abuts the protecting ring 92, which is preferably made from rubber or a similar material suitable for providing a slight space between the mounting cap 94 and the end face 100 of the core 12.

The circular end cap 98 abuts the mounting cap 94 on the opposite side as the feed roll core 12. The end cap has a central cylindrical aperture 106 configured to receive the threaded shaft of fastener 96. Reinforcing ribs 108 project outwardly from the end cap 98 with a raised mounting projection 110 centrally positioned on the end cap 98 and having the cylindrical aperture 106 therethrough. The raised mounting projections 110 extend outwardly from the lower and upper feed rolls 46, 52 and are constructed and arranged to be slidably received by mounting projection slots 112 on the frame 66.

When the raised mounting projections 110 hold the end cap 98 in a fixed position within the projection slots 112 in the frame 66, both the core 12 and the mounting cap 94 adhered thereto can rotate relative to the end cap 98.

A washer 114 is interposed between the head of the fastener 96 and the mounting cap 94. The fastener 96 is tightened to tightly engage the axial surfaces of the end cap 98 and the mounting cap 94, which is adhered to the core 12, such that friction is generated therebetween as the feed rolls are unwound. This friction retards or pre-tensions the rolls to prevent the substrates from overrunning during the unwinding thereof. This friction or tension is pre-adjusted by the manufacturer to provide the proper roll tension depending upon the type of material, size of the material, thickness of the material and any other possible factors. However, the provision of these structures for creating friction is not required and the invention may be practiced without such structures.

During the manufacturing of the lower and upper feed rolls 46, 52, their respective lead end portions 24, 50 may be adhesively bonded together to form a bonded lead end portion. A fixture with a narrow slot may be used to facilitate such engagement or it may be performed manually. The lead end portions 24, 50 are flushly positioned with one another for feeding between the upper and lower cooperating structures 84, 86 when a user inserts the lead end portion therebetween.

Various substrates may be provided to the user in a ready-to-use cartridgeless feed roll assembly 70 with the cartridgeless feed roll assembly 70 being held together prior to insertion into the processing apparatus 64 with packaging such as cardboard, tape or removable end caps. The user simply selects the appropriate cartridgeless feed roll assembly 70, individually mounts the separate feed rolls 46, 52 to the frame 66 of the apparatus 64 and inserts the lead end portions 24, 50 between the cooperating structures 84, 86 of the master processing assembly 68.

The selected substrate 26 such as a pre-printed card is fed into the nip area of the master processing assembly 68 with the protecting substrate 48 and the flexible magnet substrate 14 on opposing sides thereof. Then, the user can perform the master processing operation at his/her convenience.

Thereafter, a user operates the processing assembly 64 in much the same fashion as the apparatus 36 discussed above. In the operation of the processing assembly 64, rotation of the actuator 97 rotates the lower cooperating structure 86 causing the substrates to be fed through the cooperating structures 84, 86. The substrates are then advanced outwardly from the cooperating structures 84, 86 and onto an exit tray assembly 116. Once the substrates are advanced onto the exit tray assembly 116, the user is able to cut the flexible magnet substrate 14 around the periphery of the selected substrate 26 to separate the completed magnetically mountable adhesive construction 31, as shown in Fig. 4.

The principles of the present invention may also be applied to any type of stock materials or combination thereof, including but not limited to laminating films, adhesive transfer films, adhesive mask films and the like.

Particular representative embodiments of the carrier portion of the magnetically mountable adhesive construction for the selected substrate and representative embodiments of methods for the fabrication thereof are described below.

The release surface 20 of the flexible magnetic substrate 14 is provided by a layer of release material 22 which has a lower affinity for adhesive bonding than the adhesive carrying surface 18, the silicone release material 22 is a low friction material, such as silicone or fluorosilicone polymers, or similar low friction silicone material, to provide the release surface 20 with its relatively lower affinity for adhesive bonding than the adhesive carrying surface 18.

The flexible magnetic substrate 14 with the pressure-sensitive adhesive 16 thereon is wound about the core 12 such that the layer of adhesive 16 directly engages the release surface 20 of the substrate 14 to protect the adhesive layer 16 from exposure and accidental contact

Because the adhesive carrying surface 18 has a greater affinity for adhesive bonding than the release surface 20, the adhesive 16 can be moved away from the release surface 20 without removing the adhesive 16 from the carrying surface 18 during unwinding of a lead end portion 24 of the substrate 14.

Conversely, the adhesion of the silicone release layer material 22 to the magnetic substrate 14 should be greater than the adhesion between the release surface 20 and the adhesive layer 16. In addition, the cohesion strength of the release layer material should also be sufficiently high to maintain the integrity of the release surface when separated from the adhesive layer.

The inventive pressure sensitive adhesive magnetic sheet material should exhibit properties which allow the sheet, in the form of a continuous length, to be wound in the form of a roll and then to be easily unwound to a desired length depending on the intended application. When such sheet is wound into a roll, such as shown in the embodiment illustrated in Fig. 2, the release layer 22 comes in contact with the adhesive layer 16 of the immediately adjacent overlying layer. While in contact, these two layers provide adequate amount of adhesion so that the wound roll remains intact (without becoming loose). At the same time, the contact between the two layers does not cause permanent adhesion and allows easy release of the magnetic sheet from the roll without delamination of any of the layers from one another.

The release layer 22 should also exhibit scratch resistance so that adhesive from the adhesive layer 16 will not become exposed to make contact with the underlying magnetic layer if the release layer is inadvertantently scratched during the manufacture or rolling process or during subsequent use. Similarly, release layer 22 should exhibit abrasion resistance so that it can withstand the manufacturing process.

In one embodiment, flexible magnetic substrate 14 has a thickness of about 11 mil, however, thicker or thinner substrates may be used. Generally, a thickness of from about 5 mil to about 20 mil or even up to about 30 mil may be used. The release layer receiving surface of the magnetic substrate may, if necessary, be treated, prior to receiving the release coating layer, to enhance adhesion property. Treatments that may optionally be used for this purpose include, for example, chemical priming, flame treatment, corona treatment, and combinations thereof. In some cases, it may be possible to increase the amount of adhesion promoting agent in the release layer rather than treating the release layer receiving surface.

The adhesive layer 16 provides a layer of adhesive on adhesive layer supporting surface 18 of the magnetic substrate 14. The adhesive layer 16 may be applied to the magnetic substrate by any suitable coating technique. In one embodiment, the adhesive layer is applied as an aqueous dispersion and transfer coated. Alternatively, a non-solvent based adhesive, e.g., hot-melt adhesive, may be applied by laminating apparatus.

The adhesive used in the present invention may be, for example, a water based acrylic emulsion. The adhesive layer may also additionally include tackifiers to provide, for example, tack of 25-50 oz per inch. Commercially available tackifiers include, for example, PS 7619™ from Rohm & Haas. The adhesive may be applied to provide, for example, 13 1b per ream, although, higher or lower loadings may also be used. The adhesive layer may also include other additives such as, for example, bonding agents.

Pressure sensitive adhesives (PSAs) are normally tacky at room temperature and can be adhered to a surface by application of, at most, light finger pressure.

Pressure sensitive adhesives useful in the invention may generally be based on general compositions of polyacrylate; polyvinyl ether; diene-containing rubber such as natural rubber, polyisoprene, and polybutadiene; polychloroprene; butyl rubber; butadiene-acrylonitrile polymer; thermoplastic elastomer block copolymers such as the styrene-isoprene and styrene-isoprene-styrene block copolymers, ethylene-propylene-diene polymers, and styrene-butadiene polymer; poly-alpha-olefin; amorphous polyolefin; ethylene-containing copolymer such as ethylene vinyl acetate, ethylene ethylacrylate, and ethylene methylacrylate; polyurethane; polyamide; epoxy; polyvinyl-pyrrolidone and vinylpyrrolidone copolymers; polyesters; and mixtures of the above. A general description of useful pressure-sensitive adhesives may be found in Encyclopedia of Polymer Science and Engineering, Vol. 13, Wiley-Interscience Publishers (New York, 1988). Additional description of useful pressure sensitive adhesives may be found in Encyclopedia of Polymer Science and Technology, Vol. 1, Interscience Publishers (New York, 1964).

Other examples of PSA's useful in the invention are described in the patent literature. Examples of these patents include U.S. Re 24,906 (Ulrich), U.S. Pat. No. 3,389,827 (Abere et al at Col. 4-Col. 5), U.S. Pat No. 4,080,348 (Korpman), U.S. Pat. No. 4,136,071 (Korpman), U.S. Pat. No. 4,792,584 (Shiraki et al), U.S. Pat. No. 4,883,179 (Young et al), U.S. Pat. No. 5,019,071 (Bany), and U.S. Pat. No. 4,952,650 (Young et al). Non-pressure sensitive adhesives, such as thermally activated adhesives, solvent activated adhesives, and the like, may also be used.

Adhesive compositions for forming pressure-sensitive adhesive layer may comprise an elastomeric component and a tackifier resin component, wherein the tackifier component is present in an amount of from about 0 to about 300 parts by weight, such as from about 50 to about 150 parts by weight, per 100 parts by weight of the elastomeric component The elastomeric component may comprise at least one thermoplastic-elastomeric block copolymer. The tackifier resin component may comprise a solid tackifier resin or resins.

The tackifier resin component of the pressure-sensitive adhesive compositions may comprise at least a major amount of a tackifier resin and may contain a minor amount, i.e., up to 50% by weight, of other resins compatible with the elastomeric component. Tackifier resins include, for example, hydrocarbon resins, rosins, hydrogenated rosins, rosin esters, polyterpone resins, and other resins. Generally, adhesives exhibiting the proper balance of properties in the "quickstiak", adhesion, and cohesion strength tests as described in "Pressure-Sensitive Tapes and Labels" in C. W. Bemmels, Handbook of Adhesives, edited by Irving Skeist, Van Nostrand Reinhold company (1977), pages 724-735, are useful. Representative examples of commercially available tackifier resins suitable for the pressure-sensitive adhesive layer, include products sold under the following trademarks: WINGTACK.TM., Goodyear Tire and Rubber Co., PICCOLYTE.TM. A, Hercules, Inc., and ESCOREZ.TM., Exxon Comical Co. Other resins that may be employed in minor amounts in the tackifier resin component include, for example, polymers and copolymers of α-methylstyrene, vinyltoluene, and similar aromatic monomers, often containing from about 8 to 12 carbon atoms, polymers of coumarone, indene, and related cyclic compounds, and other resins providing internal strength to the overall composition.

The pressure-sensitive adhesive compositions may also include some amounts of other materials such as antioxidants, stabilizers, ultraviolet absorbers or stabilizers, fillers, curatives, solvents, pigments, and the like. The amount of such additives should be sufficiently low such that they do not interfere with the adhesion properties of the adhesive. Antioxidants are typically present in an amount ranging from about 0.3 to about 5.0% by weight of thermoplastic-elastomeric block copolymer. Other additives can be present in greater amounts. Additives for the adhesive composition of this invention are described in greater detail in Handbook of Pressure Sensitive Adhesive Technology, Second Edition, edited by Donatas Satas, Van Nostrand Reinhold (New York: 1989), pp. 332-335.

Adhesives used in the present invention may be extrudable or may be applied from an aqueous media. They may be crosslinked, if desired, after application.

The release layer 22 provides a release surface 20 on the magnetic substrate 14 opposed to the surface 18 which carriers the adhesive layer 16. The release layer allows the magnetic sheet laminate to be rolled upon itself and then unwound to remove a portion of the sheet of the desired length. The release coating should stably adhere to the magnetic surface while being easily separated from the adhesive layer which comes into contact with it in the wound-up form.

The release coating may be applied within some desired range of thickness but will generally have substantially less thickness than a release pauper previously used for the same purpose. Because of the lesser overall thickness of the magnetic sheet structure, the resulting roll, for any given roll diameter, may include proportionally greater length of the magnetic sheet. Typically, the amount of the release coating to be applied may be sufficient to provide a covering in the range from about 0.8 to about 1.2 gm/cm², on a dry basis.

In one embodiment, the release layer 22 is both abrasion resistant and scratch resistant so that it can endure the manufacturing process and prevent adhesive from the immediately adjacent layer from coming into contact with the magnetic substrate exposed by any scratches extending through the thickness of the release layer.

The material forming the release coating layer should have adequate flow properties to allow easy application to the magnetic substrate by the selected coating apparatus.

The release coating layer is a silicone release material. Such material comprises a silicone release agent, adhesion promoter promoting the adherence to the magnetic substrate surface, and adhesion enhancer strengthening the cohesion of the silicone coating. In a particular embodiment wherein the release layer is cured by irradiation with actinic radiation, a photoinitiator that speeds up the curing process may be included in the release layer. Silicone release agents that may be used include, but are not limited to, epoxy silicones, vinyl silicones, or septem vinyl.

In an embodiment of the invention, the release coating of the pressure-sensitive magnetic sheet material useful in the present invention includes the reaction product as described in WO 01/14486. As described in WO 01/14486, such reaction product includes

(i) one or more polydialkylsiloxanes having (meth)acrylate, vinyl and/or ethenylene groups wherein the ratio of the average number of dialkylsiloxane units to the average number of the sum of (meth)acrylate, vinyl and ethenylene groups is between 10 and 17,

(ii) one or more polydialkylsiloxanes having (meth)acrylate, vinyl and/or ethenylene groups wherein the average number of dialkylsiloxane units to the average number of the sum of (meth)acrylate, vinyl and ethenylene groups is not more than 5 and/or one or more organic compounds free of silicone and comprising at least two reactive (meth)acrylate, vinyl and/or ethenylene groups, and

(iii) an effective amount of one or more photoinitiators.

The amount of component (i) may be from about 5 to about 60 wt.%, such as, for example, 5, 10, 15, 20, 25, 30, 35, 40, etc., wt. %. The amount of component (ii) may be from about 40 to 95 wt.%, such as, for example, 95, 90, 85, 80, 75, 70, 65, 60, etc., wt. %. The percentages refer to the sum of the masses of components (i) and (ii) which add up to 100 wt. %.

In accordance with the present invention, in addition to the above components (i), (ii) and (iii) the release coating composition also includes an amount of (iv) adhesion enhancer to enhance the mechanical strength and cohesion strength of the release layer, wherein the adhesion enhancer comprises a mixture of methacrylate acid ester and trifunctional acid ester.

Radiation-curable polydialkylsiloxanes which are useful in the present invention may be selected from the group of compounds of formula (I)

R¹R¹R²SiO(R¹R¹SiO)ₓ(R¹R²SiO)_{y}(R¹R¹SiO)_{z} SiR¹R¹R²

taking into account the selection criteria specified above and below for components (i) and (ii) of the curable precursor of the reaction product comprised by the release coating. In the compounds of formula (I) R¹ independently from each other is an alkyl group having 1 - 3 carbon atoms, R² independently from each other is an optionally branched alkyl group with 1 - 20 carbon atoms wherein one or more CH₂ groups may be replaced with 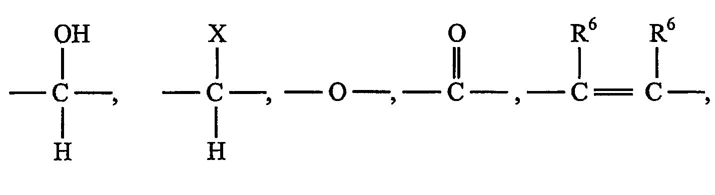 or 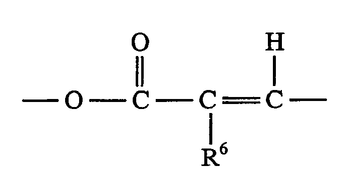 and wherein one or more CH₃ groups may be replaced with 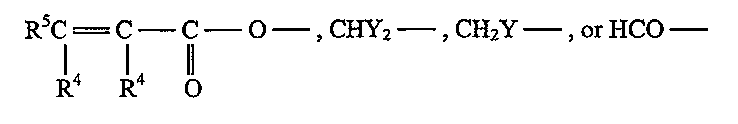 with the proviso that two oxygen atoms are not directly linked,
R⁴ independently from each other is H or CH₃,
R⁵ independently from each other is H or an optionally branched alkyl group having 1-5 carbon atoms,
R⁶ independently from each other is H or R¹,
X independently from each other is F or Cl,
Y independently from each other is F, Cl or OH,
x is 0 or a number of up to 200,
y is 0 or a number of up to 40,
z is 0 or a number of up to 200,
with the provisos that 5 ≤x + y + z ≤300 and the average number of the sum of
(meth)acrylate, vinyl and/or ethenylene groups of the compounds of formula I is ≥2

R² and/or y are selected so that the acrylate, vinyl and/or ethenylene group of the polydialkylsiloxane compounds on average is at least 2, or at least 2.1, in order to obtain upon curing (e. g., UV or electron (E)-beam curing) a crosslinked, 3-dimensional release coating. Polydialkylsiloxane compounds of formula I may have an average (meth)acrylate, vinyl and/or ethenylene functionality of at least 2.2, or at least 2.3, or about 2.3 - 6. The compounds of formula I may comprise at least one (meth)acrylate groups and especially two or more (meth)acrylate groups and no vinyl or ethenylene group.

Useful examples of group R² include 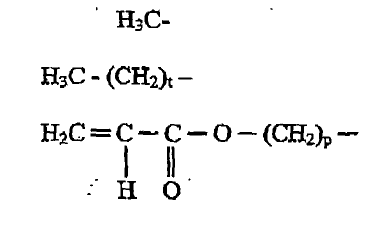 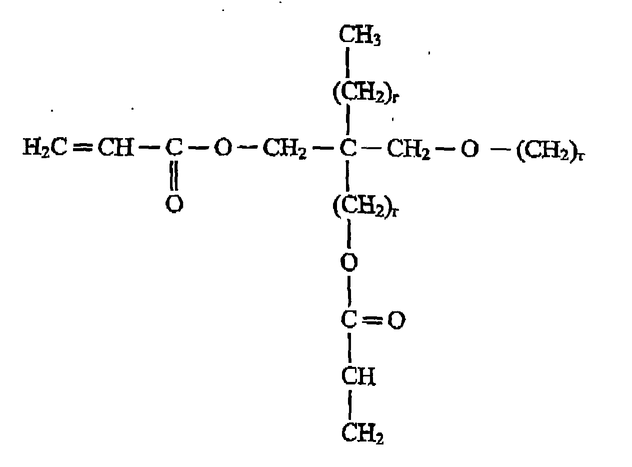 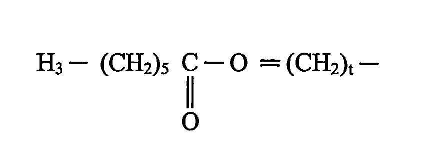 wherein
p is 1-8,
r is 0-5, and
t is 1-9.

The polydialkylsiloxanes of formula I can be prepared using the methods described in DE 38 10 140 and incorporated herein.

In one embodiment Tego RC 902^{™}, commercially available from Th. Goldschmidt AG, Essen, Germany, may be used as silicone release agent, corresponding to component (i). As described in WO 01/14486 and EP patent no. 01/14486 A1, (the disclosure of which is incorporated herein by reference thereto) the chemical composition of Tego RC 902 is believed to be:

(F¹, F², F³) - [(CH₃)₂ SiO]₅₆ Si(CH₃)₂ - (F¹, F², F³),

wherein
F¹ is 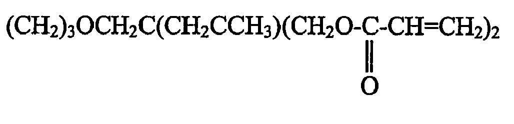
F² is 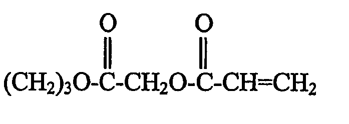
F³ is 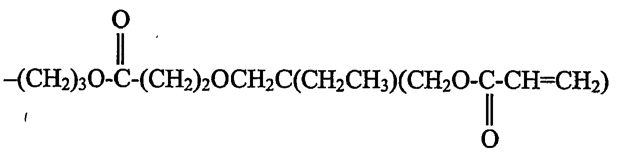
where F¹ is the major end group and F² and F³ are present in minor amount. The ratio of he average number of dimethylsiloxane groups to the average number of the sum of (meth)acrylate groups in Tego RC 902 is believed to be approximately 14:1.

Another example of a useful acrylate modified polysiloxane of formula I fulfilling selection criterion (i) is TEGO RC 715 which is commercially available from Th. Goldschmidt AG. TEGO RC 715 was analytically evaluated using NMR spectroscopy (H, C, Si) and GPC, and is believed to be

(D¹,D²)-[(CH₃)₂SiO]₂₆Si(CH₃)₂-(D¹, D²)

where
D¹ is H₂C=CHCOOCH₂CH(OH)CH₂O(CH₂)₃-
D² is HOCH₂C[(OOCCH=CH₂)H]CH₂O(CH₂)₃)-
where D¹ and D² are present approximately in a ratio of about 4 : 1.

TEGO RC 715 has a ratio of the average number of dimethylsiloxane groups -OSi(CH₃)₂- to the average number of the sum of acrylate groups (i. e. a functionality) of approximately 13.0.

Radiation-curable polydialkylsiloxanes which are useful in the present invention can further be selected from the polydialkylsiloxanes described in US patent no. 5,494,979, col. 11, In. 16 - col. 13, In. 1 and designated therein as organopolysiloxanes B, taking into account the selection criteria specified for components (i) and (ii) of the curable precursor of the reaction product comprised by the release coating of the present invention.

Polydialkylsiloxanes which are useful in component (i) of the curable precursor of the reaction product, may exhibit a ratio of the average number of dialkylsiloxane units to the average number of the sum of (meth)acrylate, vinyl and ethenylene groups of between 10 and 17 (also termed above and below as selection criteria (i)) and, more preferably, of between 10 and 15. In the compounds of formula I, the dialkylsiloxane units are designated as -OSiR¹R¹-, and the sum of (meth)acrylate, vinyl and ethenylene groups is obtained by adding up the number of such groups in substituents R².

Polydialkylsiloxanes which are useful in component (ii), exhibit a ratio of the average number of dialkylsiloxane units to the average number of the sum of (meth)acrylate, vinyl and ethenylene groups not more than 5.

In one embodiment of the invention, the release agent, e.g., silicone release agent, has a cohesive force between 3 gm and 50 gm, such as, for example, 3 gm, 5 gm, 10 gm, 20 gm, 25 gm, 30 gm, 40 gm or 50 gm or any value in between.

In one embodiment, Tego RC 711^{™}, commercially available from Th. Goldschmidt AG, Essen, Germany is used as adhesion promoter to promote adhesion of the release agent layer to the magnetic substrate surface. Tego RC 711 is analytically evaluated in EP patent no. 01/14486 A1 and the chemical composition is believed to be:

(CH₃)₃Si[OSi(CH₃)₂]_{16.2}[OSiCH₃]_{5.8}OSi(CH₃)₃

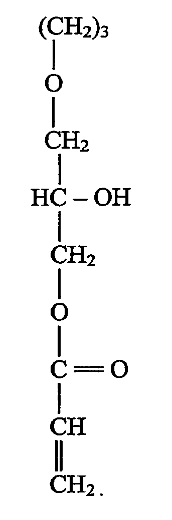

The ratio of the average number of dimethylsiloxane group to the average number of acrylate groups is approximately 2.5:1.

Another example of a useful polydialkylsiloxane compound suitable in component (ii) is TEGO RC 706 having a ratio of the average number of the sum of dimethylsiloxane groups -OSi(CH₃)₂-/average number of acrylate groups of approximately 8. TEGO RC 706 was analytically evaluated using NMR spectroscopy (H, C, Si) and GPC, and is believed to be

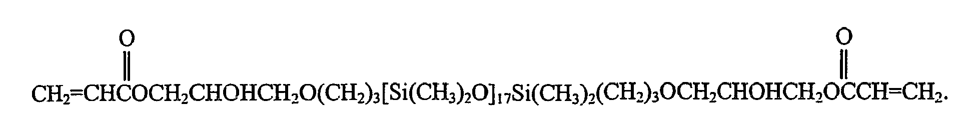

Component (ii) of the curable precursor of the reaction product comprised by the release coating useful in the present invention, may also comprise one or more organic compounds free of silicone and comprising at least two reactive (meth)acrylate, vinyl and/or ethenylene groups. (Meth)acrylate substituted silicone-free organic compounds such as (meth)acrylated polyhydroxy compounds or (meth)acrylated polyamino compounds may be used.

The silicone-free organic compound useful in component (ii) of the reaction product may have at least two or at least three acrylate and/or methacrylate groups. The organic compound should may also have a viscosity of between 20 mPa.s and 2,000 mPa.s at 25 °C or between 100 mPa.s and 600 mPa.s at 25 °C. Particular examples of organic compounds for use in the invention include ditrimethylol propane tetraacrylate available as E 140 from UCB Chemicals, Belgium and E 810, a polyester tetraacrylate available from UCB. Modified pentaerythritol triacrylate (viscosity ca. 500 mPa s) available as SR-444 from Sartomer, aliphatic diacrylate oligomer (viscosity ca 1,000 mPa s) available as CN-132 from Sartomer, ethoxylated bisphenol A dimethacrylate (viscosity ca. 1,100 mPa s) available as SR-348 from Sartomer, bisphenol A derivative diacrylate oligomer (viscosity ca. 1,400 mPa s) available as E-150 from UCB.

Due to their lower polarity in comparison to the compounds of component (ii), the compounds of component (i) tend to accumulate at the exposed surface of the release layer applied to the magnetic substrate, thereby influencing the surface properties of the release coating.

As described in WO 01/14486, if component (i) is based on polydialkylsiloxane compounds with a lower polarity, i. e. with a ratio of the average number of polydialkylsiloxane groups/average number of the sum of (meth)acrylate, vinyl and/or ethenylene groups of more than 17, the resulting cured release coating tends to exhibit an insufficient anchoring to the backing and/or an insufficient mechanical stability, as can be seen, for example, from the response of the release coating to a re-adhesion test and/or to an abrasion test which measures the amount of cured release coating removed under specified abrasion conditions and therefore reflects the mechanical stability of the release coating. The re-adhesion test indicates whether the cured release coating when adhered to a substrate under specified conditions, is damaged upon removal from such adhesive surface.

According to WO 01/14486 the amount of the compound or compounds, respectively, of component (ii) is preferably selected to vary between 70 and 95 wt. % with respect to the sum of the masses of the compounds of component (i) and (ii) which add up to 100 wt. %. If the amount of the compound or compounds, respectively, of component (ii) is less than 70 wt. %, the anchoring of the release coating on the backing of the pressure-sensitive adhesive tape may be too low and the release coating tends to be abradable.

The concentration of components (i) and (ii) of the radiation-curable precursor of the reaction product may be selected within the ranges as given above so that the precursors of the reaction product and the release coating, respectively, form coatable mixtures or solutions. If necessary, a small amount of solvent such as, for example, heptane, may be added.

In the polydialkylsiloxane compounds useful in components (i) and (ii), the reactive groups are often (meth)acrylate or vinyl and more often (meth)acrylate.

In the polydialkylsiloxane compounds useful in components (i) and (ii), the alkyl groups in the dialkylsiloxane units -OSi(alkyl)₂- may, independently from each other, be methyl, ethyl, n-propyl or i-propyl, such as methyl or ethyl.

The reaction product comprised by the release coating of the present invention, may furthermore, depending on need, include one or more photoinitiators in an amount to effect photopolymerization of components (i) and (ii) of the precursor of the reaction product. Examples of suitable photoinitiators include benzyl ketals, benzoin ethers, acetophenone derivates, ketoxime ethers, benzophenone and benzo- or thioxanthones. Specific examples of photoinitiators include: 2,2-diethoxyacetophenone; 2- or 3- or 4-bromoacetophenone; benzoin; benzophenone; 4- chlorobenzophenone; 4-phenylbenzophenone; benzoquinone; 1- chloroanthroquinone; p-diacetyl-benzene; 9, 10 dibromoanthracene; 1,3-diphenyl-2-propanone; 1,4-naphthyl-phenyl ketone; 2,3-pentenedione; propiophenone; chlorthioxanthone; xanthone; fluorene; and mixtures thereof. An example of a suitable photoinitiator is Darocure 1173, which is commercially available from Ciba Geigy, Switzerland. Other examples of suitable photoinitiators include Esacure KIP 150 which is commercially available from Fratelli-Lamberti, Italy; and Tego RC750 available from Goldschmidt AG, Essen, Germany. Alternatively, the release layer may be cured using E-beams in which case, a photoinitiator is not required.

The precursor of the release coating composition may also include additives such as, for example, stabilizers, dyes, pigments, antioxidants, fillers such as, for example, silica or conductive particles, and combinations thereof. The precursor of the release coating may furthermore comprise polymer additives such as, for example, film-formers or polyolefin-based waxes.

The amount of such additives preferably is no greater than 35 wt. %, more preferably no greater than 30 wt. % with respect to the sum of the masses of components (i) and (ii).

The release layer includes an adhesion enchancer, which comprises a mixture of methacrylate acid ester and trifunctional acid ester (ethoxylated) trimethylolpropane triacrylate ester. Sartomer CD 9051^{™} is believed to be a mixture of proprietary methacrylate acid ester and trifunctional acid ester (ethoxylated trimethylolpropane triacrylate ester, CAS 28961-13-5). An adhesion enhancer is useful to promote the adherence of the release coating layer to the magnetic substrate.

Acrylate monomer adhesion enhancers, such as, Sartomer CD 9051^{™}, provide fast cure response, hardness, chemical resistance, water resistance, and abrasion resistance. The use of adhesion enhancer, such as, Sartomer CD 9051^{™}, is also believed to enhance the cross linking of acrylate functionality to OH groups formed, for example, on the release layer supporting surface of the magnetic substrate following corona treatment.

According to U.S. Patent No. 5,776,655, Sartomer CD 9051 is a mixture of bis(2-methacryloyloxyethyl)hydrogen phosphate with ethoxylated trimethylolpropane triacrylate ester.

The release layer, such as silicone release layer, may, after being coated on the magnetic substrate, be cured by exposure to actinic radiation, such as ultraviolet light. In one embodiment of the invention, a photoinitiator, such as Darocur 1173^{™} (2-hydroxy-2-methyl-1-phenyl-propan-1-one), commercially available from Ciba Specialty Chemicals, Inc., may be included in the release layer to promote curing.

In one embodiment, the weight percentage of release agent, e.g., Tego RC 902^{™}, and adhesion promoter, e.g., Tego RC 711^{™}, is about 70 wt.% and 30 wt.%, respectively, although higher or lower ratios may be used depending on the desired properties. For example, in the case of Tego RC 902 and Tego RC 711, at a ratio of about 80/20, the scratch resistance is diminished to the extent that damage may occur.

According to a particular embodiment, the usage level, in weight percent based on the total composition of the release layer composition, of adhesion enhancer, such as, e.g., Sartomer CD 9051^{™}, is in the range of from about 1 to about 4 wt%, such as, for example, 1 wt%, 1.5 wt%, 2.0 wt%, 2.3 wt%, 2.5 wt%, 2.8 wt%, 3.0 wt%, 3.5 wt%, 4.0 wt%, or values in between.

According to a particular embodiment, the usage level, in weight percent based on the total composition of the release layer composition, of photoinitiator, e.g., Darocur 1173^{™}, is in the range of from about 1 to about 5 wt%, such as, for example, 1.0 wt%, 1.5 wt%, 2.0 wt%, 2.5 wt%, 3.0 wt%, 3.3 wt%, 3.5 wt%, 3.8 wt%, 4.0 wt%, 4.5 wt%, 5.0 wt%, or values in between.

In such case, as in embodiments described above, sufficient and appropriate adhesion promoters and/or adhesion enhancers, for promoting the adhesion of the release layer to the flexible magnetic substrate and the cohesion of the release layer, may be incorporated.

In an embodiment of the invention, the release layer composition is applied to the magnetic substrate, generally after pre-treatment of the latter, e.g., corona treatment, in an amount sufficient to provide a coating weight of about 1.0 gram per square meter, although higher or lower amounts may be provided according to need and the particular composition of the release layer. The thickness of the release coating layer may be varied within a wide range while still offering thickness advantages with respect to conventional release liner papers. For example, the thickness of the release layer may be varied from about 0.2 (or less) microns (µm) to about 1 µm.

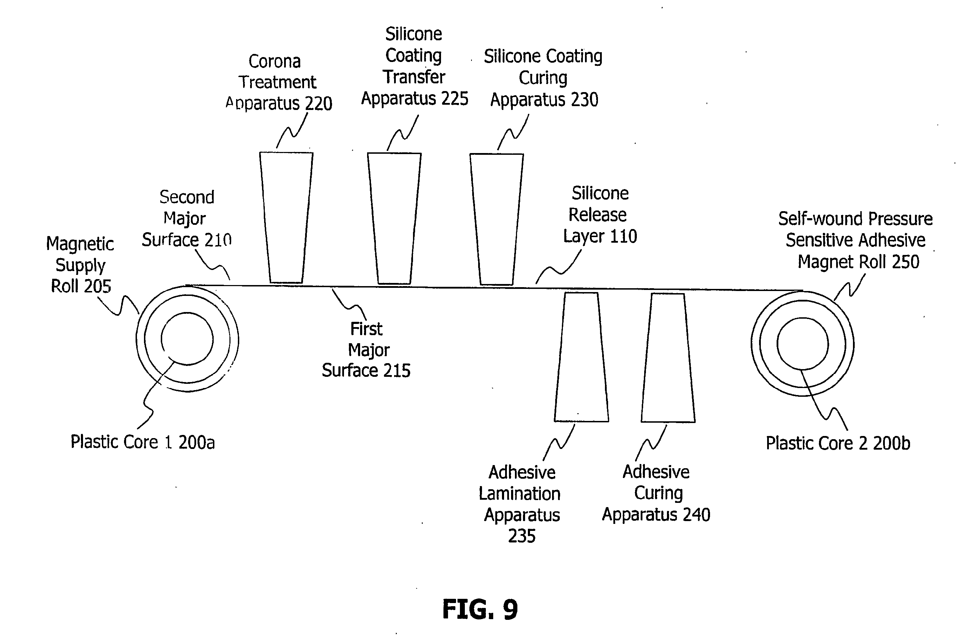

Fig. 9 depicts a schematic 200 of an exemplary process of making a pressure sensitive adhesive magnetic carrier sheet in the form of a roll, according to an embodiment of the present invention. The magnetic substrate 120 is supplied from a magnetic sheet material supply roll 205. The first major surface 215 of the magnetic substrate 120 is facing down and the second major surface 210 of the magnetic substrate 120 is facing up in the depicted schematic 200.

Once the magnetic substrate 120 is released from the magnet sheet material supply roll 205, its second major surface may be treated in an adhesion enhancing treating zone. As mentioned earlier, this adhesion enhancing may include a corona treatment using a corona treatment apparatus 220. A coating of silicone release layer is applied to the treated magnetic substrate in a release layer applying zone using silicone coating transfer apparatus 225. The release silicone coating layer can be applied to the second major surface 210 using any of the techniques known in the art, such as roll coating, gravure coating, multi-roll coating, reverse roll, or any other coating processes.

The coating of silicone release layer composition is applied in its uncured condition to the major surface 210 of the magnetic substrate. The uncured coating on the second major surface 210, is directed to a curing zone where silicone coating curing apparatus 230, such as a bank of ultraviolet lights, is used to effect curing.

As described above, the release coating 110 is radiation curable. That is, the release coating can be cured upon exposure to radiation under certain conditions. When such conditions are met, the release coating is converted into a cross linked polymer film that adheres to the second major surface of the magnet substrate 120.

The polymerization may be activated by the photoinitiators in the silicone release coating that initiate a reaction in the silicone release agent when the composition is exposed to radiation. Such activation further causes curing or crosslinking. Therefore, polymerization may be achieved by irradiating ultraviolet light on the coated surface. Various techniques known in the art to provide ultraviolet radiation may be adopted. For example, some radiation techniques may use sources such as mercury, metal additives, or lamps. Other light sources such as nitrogen, xenon, or electron beam may also be used as sources of radiation.

Various operational parameters affect the curing process, as is well known in the art, for example, the amount and type of radiation used and the length of the exposure. The amount of radiation needs to be sufficiently intense to activate polymerization. The length of exposure may depend on a number of factors such as the intensity of the radiation source used and, when present, the type and the amount of photoinitiators in the release coating composition. Generally, exposure times may range from a fraction of a second to several seconds or longer, depending on the intensity of the radiation source and other factors known to those skilled in the art.

In one embodiment, the silicone coating curing apparatus 230 employs two variable 600 watts/cm lamps (manufactured by Fusion UV Systems, Inc., Gaithersburg, Maryland, U.S.A.) as radiation sources. To cure the silicone release coating, the lamps are positioned in close proximity to the uncured surface and activated to provide sufficient energy to the uncured surface to effect curing of the silicone coating. The radiation process may be carried out in an inert atmosphere.

After the silicone release layer 110 is cured, the magnet substrate 120 with cured silicone release layer 110 is directed further in the process to produce the adhesive layer 130. The adhesive layer 130 in the present invention may be a pressure sensitive adhesive. Any of a wide variety of pressure sensitive adhesives, such as previously described, may be used. For instance, pressure sensitive adhesives may include polyolefin-based polymers, acrylic-based adhesives, or tackified rubber-based adhesives.

Adhesive layer 130, may be formed, for example, by forwarding the magnet substrate 120 to an adhesive transfer apparatus 235 in an adhesive application zone where the adhesive used is transferred to the first major surface 215 of the magnet substrate 120. In one embodiment, adhesives in a form of polymers (e.g., solventless, such as, hot-melt adhesive) may be used. In this case, the adhesive transfer apparatus 235 may simply laminate the polymers onto the first major surface 215.

In another eqmbodiment, adhesive may be supplied as an aqueous emulsion or dispersion. In this case, the adhesive transfer apparatus 235 may use conventional techniques known in the art to first apply a thin adhesive coating to the first major surface 215. This adhesive coating is then cured (e.g., dried) to make the adhesive adhere to the first major surface 215. Any suitable adhesive coating/curing apparatus 240 can be used to apply and cure the adhesive coating using techniques known in the art, such as, for example, heat. Where further curing, e.g., crosslinking, is needed, ultraviolet (UV) light irradiation, or electron beam ("EB" or "E-beam") radiations, may also be used. The adhesive layer adheres to the first major surface 215.

In another embodiment, the order of applying and curing the adhesive layer and the release layer may be reversed. In still another embodiment, it may be feasible to simultaneously effect or complete drying and/or curing of the adhesive and release layers.

In an alternative embodiment, the silicone release layer may be formulated as a solvent based radiation-curable silicone release material formulation in which case, the process for making the silicone release liner as described in U.S. Patent No. 6,299,945, may be adopted. The disclosure of this patent is incorporated herein in its entirety, by reference thereto.

In the resulting magnetic sheet material, the flexible magnet substrate 120 is interposed between the silicone release layer 110 and the adhesive layer 130, and the resulting laminate may be wound on a plastic (e.g., hollow) core 2 120b to form a self-wound pressure sensitive adhesive magnet roll 250. The self-wound pressure sensitive adhesive magnet roll 250 exhibits desirable release properties. During winding, the silicone release layer 110 comes in contact with the adhesive layer 130, of the immediate underlying turn of the magnetic sheet. The release and pressure-sensitive adhesive layers exhibit enough adhesion so that the wound sheet will loosen. Yet, when certain force is applied, the adhesion between the two layers will not prevent the rolled sheet from being easily unwound without leaving any residue of the adhesive layer on the adjacent release layer and similarly, without leaving residue of the release layer on adjacent adhesive layer. In addition, due to the abrasion resistance, the silicone release layer 110 can endure the processing process described in Fig. 9.

Furthermore, the scratch resistant property of the release layer prevents the adhesive from leaking onto the magnet surface through the silicone release layer 110. With these desired properties, the magnet substrate 120 can be self-wound and released without needing a separate release liner sheet.

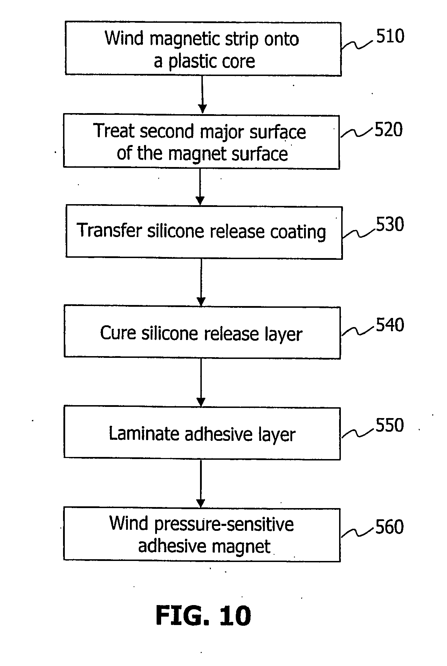

Fig. 10 is a flowchart of an exemplary process for producing pressure sensitive adhesive magnet, according to embodiments of the present invention. A magnet is first wound, at act 510, onto a first plastic core. When the magnet is directed to the processing line, its second major surface is treated, at act 520, using one of the described treatments. Silicone release coating is then transferred, at act 530, onto the treated surface and then is cured, at act 540, through ultraviolet radiation. The adhesive layer is subsequently laminated, at act 550, onto the first major surface of the magnet. This produces pressure sensitive adhesive magnet which is then wound, at act 560, onto a second plastic core with, preferably, shock absorber.

The magnetic sheets according to the invention may be used, for example, in the mounting of selected substrates adhered to the pressure sensitive layer to a magnetizable surface, such as, for example, a refrigerator door. In particular, the roll of the magnetic sheet according to an embodiment of the invention may be used in the devices and methods of, for example, U.S. Patent No. 5,580,527, 5,584,962, U.S. Patent Application No. 09/189,273, the disclosures of which are incorporated herein, in their entireties, by reference thereto.

### EXAMPLES

Properties of the magnetic sheet material, such as, for example, scratch and abrasion resistance, aging behavior (changes in adhesion values of the magnet sheet material over time), are tested.

The experiments were conducted on six pressure sensitive adhesive magnet magnets (using a magnetic substrate provided by Magnum Magnetics, Ohio) produced by following the process described above. The aging behavior of the pressure sensitive adhesive magnet is evaluated using measurement of peel adhesion stripping test (SS) terms of oz per inch required to peel the release layer from the magnetic substrate. Furthermore, such measurements were also made at the initial day and at time intervals following the initial day, i.e., 11^{th} day, 25^{th} day and 33^{rd}, after the magnetic sheet material was exposed to heat by storing in an oven at 120 °F.

During each measurement period, measurements are further made at multiple points. At each measurement point, four values are measured: a first peak value (static peak force measured at initial peel), a second peak value (kinetic peak force - highest peel force); a valley value (lowest peel force) and an average value of the peak values. Across all the measurement points, the mean and the standard deviation of each of the above values is computed. The results are shown in Table 1.

In Table 1, each experimental magnet has 4 sets of measurements made at four different measurement period (initial day of the experiment, 11 days after, 25 days after, and 33 days after). Each set of the measurements include five means and the corresponding standard deviations: the means and the standard deviations of the two peak measurements made at multiple measurement points, the mean and standard deviation of the valley measurements made at the same multiple points, the mean and the standard deviation of the average values at those multiple points, and the root mean square of the of all samples tested.

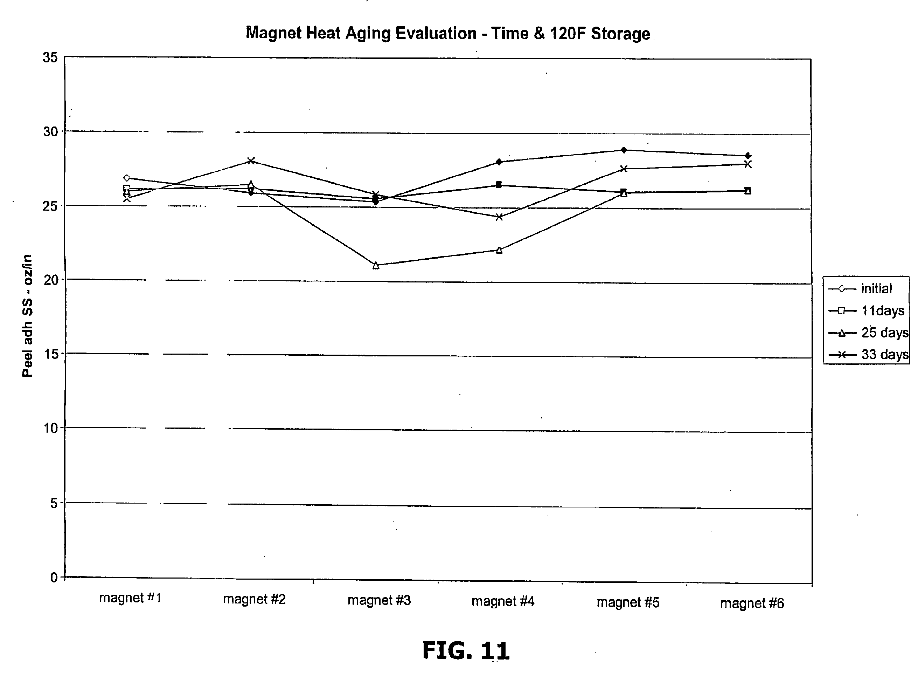

Table 2 shows the mean of the average values at different measurement period of the experimental magnets. Experimental data illustrated in Table 2 is also plotted in Fig. 11 that visually shows the aging behavior of the inventive pressure sensitive adhesive magnet.

| ID | Initial day | 11 days | 25 days | 33 days |
|---|---|---|---|---|
| Magnet 1 | 26.796 | 26.104 | 25.972 | 25.521 |
| Magnet 2 | 25.944 | 26.182 | 26.496 | 28.004 |
| Magnet 3 | 25.327 | 25.579 | 21.066 | 25.812 |
| Magnet 4 | 28.008 | 26.463 | 22.082 | 24.352 |
| Magnet 5 | 28.839 | 26.088 | 25.964 | 27.609 |
| Magnet 6 | 28.541 | 26.213 | 26.193 | 27.988 |

In Fig. 11, the X-axis represents different experimental magnets and the Y-axis represents the amount of peel adhesion SS measured in oz per inch. For each magnet, there are four plotted points, representing the means of average peel adhesion SS measured at different time intervals. The closer are the four points, the better the aging behavior. The magnet 1 has all its measurements ranging between 25.521 to 26.796. Magnet 2 has a range of 25.944 to 28.004. Magnet 3 has a range of 21.066 to 25.812. Magnet 4 has a range of 22.082 and 28.008. Magnet 5 has a range of 25.964 and 28.839. Magnet 6 has a range of 26.193 and 28.542. From Fig. 11 it can be seen that the pressure sensitive adhesive magnet exhibits good aging behavior.

While the invention has been described with reference to the certain illustrated embodiments, the words that have been used herein are words of description, rather than words of limitation. Changes may be made, within the scope of the appended claims, without departing from the scope of the invention in its aspects. Although the invention has been described herein with reference to particular structures, acts, and materials, the invention is not to be limited to the particulars disclosed, but rather can be embodied in a wide variety of forms, some of which may be quite different from those of the disclosed embodiments, and extends to all equivalent structures, acts, and, materials, such as are within the scope of the appended claims.

## Claims

1. A pressure sensitive adhesive magnetic sheet material, comprising:
a flexible magnetic substrate having a first major surface and a second major surface,
a pressure sensitive adhesive layer on the first major surface; and
a release layer on the second major surface;
wherein the flexible magnetic substrate is wound into a roll such that the adhesive layer directly engages the release layer;
wherein the release layer is a cured mixture comprising:
(i) a silicone release agent;
(ii) an adhesion promoter promoting the adherence of the release layer to the second major surface of the magnetic substrate; and
(iii) an adhesion enhancer to strengthen cohesion of the release layer, wherein the adhesion enhancer comprises a mixture of methacrylate acid ester and trifunctional acid ester.

2. The pressure sensitive adhesive magnetic sheet material according to claim 1, wherein the mixture comprising the release layer is radiation cured.

3. The pressure sensitive magnetic sheet material according to claim 2, wherein the mixture further comprises a photoinitiator activated by the radiation.

4. The pressure sensitive adhesive magnetic sheet material according to any one of claims 1-3, wherein the silicone release agent is represented by the formula:
R¹R¹R²SiO(R¹R¹SiO)ₓ(R¹R²SiO)_{y}(R¹R¹SiO)_{z} SiR¹R¹R²
wherein:
R¹ independently from each other is an alkyl group having 1 - 3 carbon atoms,
R² independently from each other is an optionally branched alkyl group with 1 - 20 carbon atoms wherein one or more CH₂ groups may be replaced with 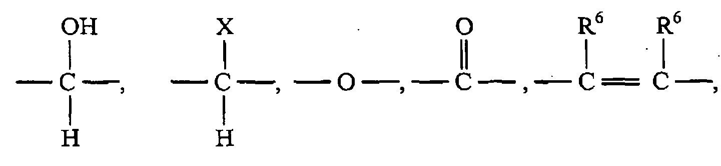 or 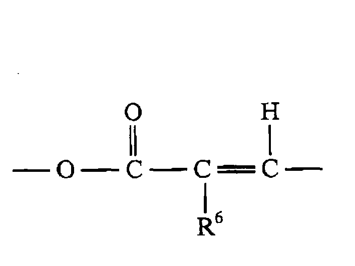 and wherein one or more CH₃ groups may be replaced with 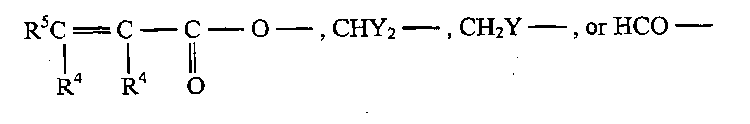 with the proviso that two oxygen atoms are not directly linked,
R⁴ independently from each other is H or CH₃,
R⁵ independently from each other is H or an optionally branched alkyl group having 1-5 carbon atoms,
R⁶ independently from each other is H or R¹,
X independently from each other is F or Cl,
Y independently from each other is F, Cl or OH,
x is 0 or a number of up to 200,
y is 0 or a number of up to 40,
z is 0 or a number of up to 200,
with the provisos that 5 ≤x + y + z ≤300 and the average number of the sum of (meth)acrylate, vinyl and/or ethenylene groups of the compounds of formula I is ≥2.

5. The pressure sensitive adhesive magnetic sheet according to any one of claims 1-3, wherein the silicone release agent is represented by the formula
(F¹ , F² , F³) - [(CH₃)₂ SiO]₅₆ Si(CH₃)₂ - (F¹ , F² , F³),
wherein
F¹ is 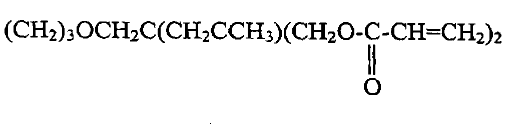
F² is 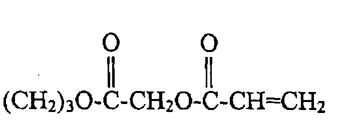
F³ is 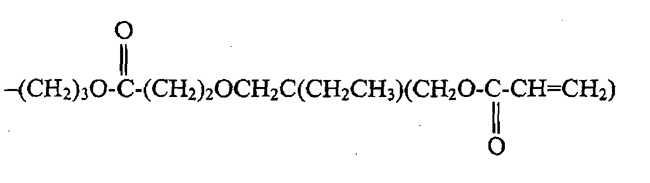
where F¹ is the major end group and F² and F³ are present in minor amount, and wherein the ratio of the average number of dimethylsiloxane groups to the average number of the sum of (meth)acrylate groups is approximately 14:1.

6. The pressure sensitive adhesive magnet according to any one of claims 1-5, wherein the adhesion promoter is represented by the formula:
(D¹,D²)-[(CH₃)₂SiO]₂₆Si(CH₃)₂-(D¹, D²)
where
D¹ is H₂C=CHCOOCH₂CH(OH)CH₂O(CH₂)₃-
D² is HOCH₂C[(OOCCH=CH₂)H]CH₂O(CH₂)₃)-
where D¹ and D² are present approximately in a ratio of 4 : 1;
and wherein the ratio of the average number of dimethylsiloxane groups -OSi(CH₃)₂- to the average number of the sum of acrylate groups is approximately 13.0.

7. The pressure sensitive adhesive magnetic sheet according to any one of claims 1-3, wherein the release layer comprises the product obtained by curing
90 to 60 weight percent of silicone release agent;
10 to 40 weight percent of adhesion promoter; and
1 to 4 weight percent of adhesion enhancer.

8. The pressure sensitive adhesive magnetic sheet according to any one of claims 1-3, wherein the release layer comprises the product obtained by curing
80 to 65 weight percent of silicone release agent;
20 to 35 weight percent of adhesion promoter; and
1.5 to 3 weight percent of adhesion enhancer.

9. The pressure sensitive adhesive magnetic sheet according to any one of claims 1-3, wherein the release layer comprises the product obtained by curing
70 weight percent of silicone release agent;
30 weight percent of adhesion promoter; and
2 to 3 weight percent of adhesion enhancer.

10. The pressure sensitive adhesive magnetic sheet according to any one of claims 1-3, wherein the release layer comprises the reaction product of
(i) one or more polydialkylsiloxanes having (meth)acrylate, vinyl and/or ethenylene groups wherein the ratio of the average number of dialkylsiloxane units to the average number of the sum of (meth)acrylate, vinyl and ethenylene groups is between 10 and 17,
(ii) one or more polydialkylsiloxanes having (meth)acrylate, vinyl and/or ethenylene groups wherein the average number of dialkylsiloxane units to the average number of the sum of (meth)acrylate, vinyl and ethenylene groups is not more than 5 and/or one or more organic compounds free of silicone and comprising at least two reactive (meth)acrylate, vinyl and/or ethenylene groups, and
(iii) an effective amount of one or more photoinitiators.

11. The pressure sensitive magnetic sheet according to claim 10, wherein the amount of component (i) is from 5 to 40 wt.%; and the amount of component (ii) is from 95 to 60 wt.%, wherein the sum of the amounts of (i) and (ii) is 100 wt%.

12. The pressure sensitive adhesive magnetic sheet according to any one of claims 1-11, wherein the release layer is radiation cured in the presence of a photoinitiator.

13. The pressure sensitive adhesive magnetic sheet according to any one of claims 1-12, wherein the release layer is cured using E-beam radiation.

14. The pressure sensitive adhesive magnetic sheet according to any one of claims1-14, wherein said magnetic substrate is wound about a core.

15. The pressure sensitive adhesive magnetic sheet according to any one of claims1 -14, wherein said magnetic material comprises a plurality of rare earth particles and wherein said flexible magnetic substrate is formed from a flexible matrix material having said rare earth particles embedded therein.

16. The pressure sensitive adhesive magnetic sheet according to claim 15, wherein said matrix material is rubber.

17. The pressure sensitive adhesive magnetic sheet according to claim 14, wherein
said core is rotatably mounted to a cartridge body structure constructed and arranged to be removably mounted to a processing apparatus having cooperating pressure applying structures operable to apply pressure to substrates fed therebetween to enable the lead end portion to be unwound and fed in between the pressure applying structures of the processing apparatus;
said cartridge body structure comprising a second core and a flexible protecting substrate wound about said second core, said second core being rotatably mounted to said cartridge body structure so as to enable a lead end portion of said protecting substrate to be unwound and fed between the pressure applying structures of the processing apparatus along with said flexible magnetic substrate so that said protecting substrate covers any exposed portions of the adhesive layer to prevent said exposed portions from contacting to the cooperating pressure applying structures.

18. A pressure sensitive adhesive magnetic sheet according to claim 14, wherein said core has mounting structure on the ends thereof constructed and arranged to be mounted to a frame of a processing apparatus, the apparatus including cooperating pressure applying structures operable to apply pressure to substrates fed therebetween.

19. A method for making a pressure-sensitive magnetic material, the method comprising:
applying a pressure-sensitive adhesive layer on a first major surface of a flexible magnetic substrate;
coating a release layer onto a second major surface of the flexible magnetic substrate;
curing the release layer; and
winding the flexible magnetic substrate into a roll such that the adhesive layer directly engages the release layer;
wherein the release layer is a mixture comprising:
(i) a silicone release agent;
(ii) an adhesion promoter promoting the adherence of the release layer to the second major surface of the magnetic substrate; and
(iii) an adhesion enhancer to strengthen cohesion of the release layer,
wherein the adhesion enhancer comprises a mixture of methacrylate acid ester and trifunctional acid ester.

20. A method according to claim 19, wherein the release layer is cured using radiation.

21. A method according to claim 20, wherein the mixture comprising the release layer further comprises a photoinitiator activated by the radiation.

22. A method according to any one of claims 19-21, wherein the silicone release agent is represented by the formula:
R¹R¹R²SiO(R¹R¹SiO)ₓ(R¹R²SiO)_{y}(R¹R¹SiO)_{z} SiR¹R¹R²
wherein
R¹ independently from each other is an alkyl group having 1 - 3 carbon atoms,
R² independently from each other is an optionally branched alkyl group with 1 - 20 carbon atoms wherein one or more CH₂ groups may be replaced with 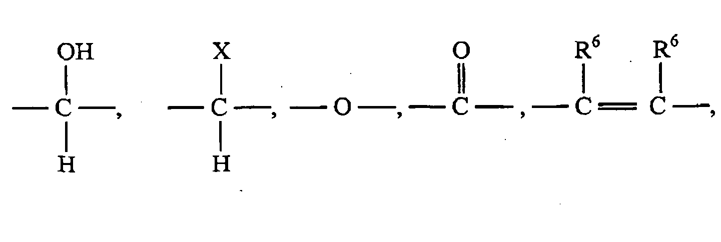 or 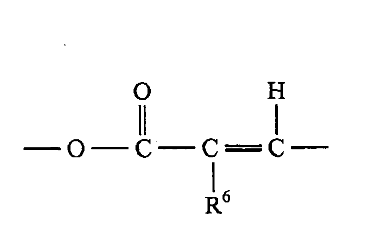 and wherein one or more CH₃ groups may be replaced with 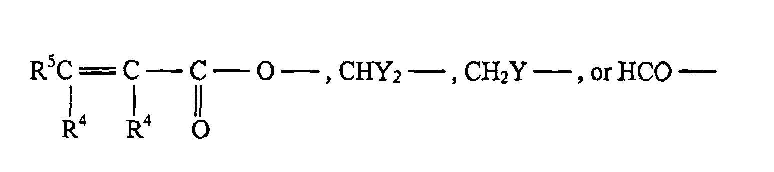 with the proviso that two oxygen atoms are not directly linked,
R⁴ independently from each other is H or CH₃,
R⁵ independently from each other is H or an optionally branched alkyl group having 1-5 carbon atoms,
R⁶ independently from each other is H or R¹,
X independently from each other is F or Cl,
Y independently from each other is F, Cl or OH,
x is 0 or a number of up to 200,
y is 0 or a number of up to 40,
z is 0 or a number of up to 200,
with the provisos that 5 ≤x + y + z ≤300 and the average number of the sum of (meth)acrylate, vinyl and/or ethenylene groups of the compounds of formula I is ≥2.

23. A method according to any one of claims 20-22, wherein the silicone release agent is represented by the formula
(F¹ , F² , F³) - [(CH₃)₂ SiO]₅₆ Si(CH₃)₂ - (F¹ , F² , F³),
wherein
F¹ is 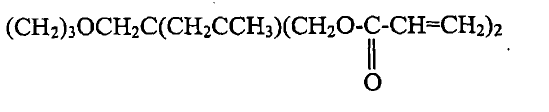
F² is 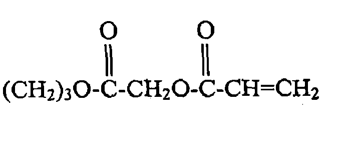
F³ is 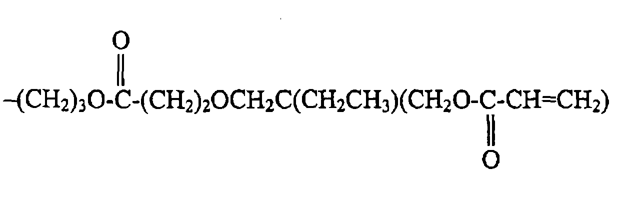
where F¹ is the major end group and F² and F³ are present in minor amount, and wherein the ratio of the average number of dimethylsiloxane groups to the average number of the sum of (meth)acrylate groups is approximately 14:1.

24. A method according to any one of claims 19-23, wherein the adhesion promoter is represented by the formula:
(D¹,D²)-[(CH₃)₂SiO]₂₆Si(CH₃)₂-(D¹, D²)
where
D¹ is H₂C=CHCOOCH₂CH(OH)CH₂O(CH₂)₃-
D² is HOCH₂C[(OOCCH=CH₂)H]CH₂O(CH₂)₃)-
where D¹ and D² are present approximately in a ratio of 4 : 1;
and wherein the ratio of the average number of dimethylsiloxane groups -OSi(CH₃)₂- to the average number of the sum of acrylate groups is approximately 13.0.

25. A method according to any one of claims 19-21, wherein the release layer comprises the product obtained by curing
90 to 60 weight percent of silicone release agent;
10 to 40 weight percent of adhesion promoter; and
1 to 4 weight percent of adhesion enhancer.

26. A method according to any one of claims 19-21, wherein the release layer comprises the product obtained by curing
80 to 65 weight percent of silicone release agent;
20 to 35 weight percent of adhesion promoter; and
1.5 to 3 weight percent of adhesion enhancer.

27. A method according to any one of claims 19-21, wherein the release layer comprises the product obtained by curing
70 weight percent of silicone release agent;
30 weight percent of adhesion promoter; and
2 to 3 weight percent of adhesion enhancer.

28. A method according to claim 19, wherein the release layer is cured using E-beam radiation.

## Patentansprüche

1. Ein magnetisches Haftklebstoffflächengebildematerial, umfassend:
ein flexibles magnetisches Substrat mit einer ersten Hauptoberfläche und einer zweiten Hauptoberfläche,
eine Haftklebstoffschicht auf der ersten Hauptoberfläche; und
eine Trennmittelschicht auf der zweiten Hauptoberfläche;
wobei das flexible magnetische Substrat zu einer Rolle gewickelt ist, so dass die Klebstoffschicht direkt mit der Trennmittelschicht ineinandergreift;
wobei die Trennmittelschicht ein gehärtetes Gemisch ist, umfassend:
(i) ein Silikon-Trennmittel;
(ii) einen Adhäsionspromotor, welcher das Anhaften der Trennmittelschicht an der zweiten Hauptoberfläche des magnetischen Substrats fördert; und
(iii) einen Adhäsionsverstärker zur Stärkung der Kohäsion der Trennmittelschicht, wobei der Adhäsionsverstärker ein Gemisch von Methacrylatsäureester und trifunktionellem Säureester umfasst.

2. Das magnetische Haftklebstoffflächengebildematerial gemäß Anspruch 1, wobei das Gemisch, welches die Trennmittelschicht umfasst, strahlungsgehärtet ist.

3. Das magnetische druckempfindliche Flächengebildematerial gemäß Anspruch 2, wobei das Gemisch ferner einen Photoinitiator, welcher durch die Strahlung aktiviert wird, umfasst.

4. Das magnetische Haftklebstoffflächengebildematerial gemäß einem der Ansprüche 1 bis 3, wobei das Silikon-Trennmittel durch die folgende Formel dargestellt wird:
R¹R¹R²SiO(R¹R¹SiO)ₓ(R¹R²SiO)_{y}(R¹R¹SiO)_{z} SiR¹R¹R²
wobei:
R¹ unabhängig voneinander ein Alkylrest mit 1 bis 3 Kohlenstoffatomen ist,
R² unabhängig voneinander ein gegebenenfalls verzweigter Alkylrest mit 1 bis 20 Kohlenstoffatomen ist, wobei eine oder mehr CH₂-Gruppen ersetzt sein können mit 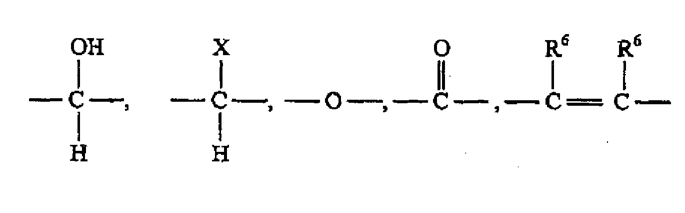 oder 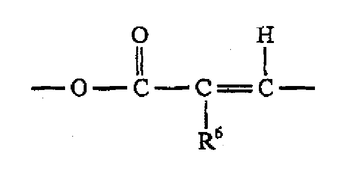 und wobei eine oder mehr CH₃-Gruppen ersetzt sein können mit 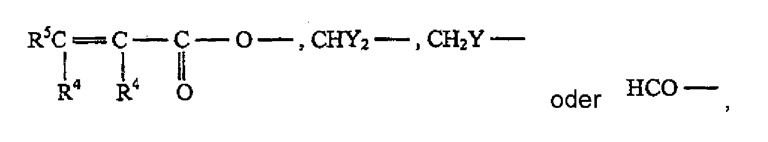 mit der Maßgabe, dass zwei Sauerstoffatome nicht direkt verbunden sind,
R⁴ unabhängig voneinander H oder CH₃ ist,
R⁵ unabhängig voneinander H oder ein gegebenenfalls verzweigter Alkylrest mit 1 bis 5 Kohlenstoffatomen ist,
R⁶ unabhängig voneinander H oder R¹ ist,
X unabhängig voneinander F oder Cl ist,
Y unabhängig voneinander F, Cl oder OH ist,
x für 0 oder eine Zahl von bis zu 200 steht,
y für 0 oder eine Zahl von bis zu 40 steht,
z für 0 oder eine Zahl von bis zu 200 steht,
mit der Maßgabe, dass 5 ≤ x + y + z ≤ 300 und die mittlere Anzahl der Summe von (Meth)acrylat-, Vinyl- und/oder Ethenylengruppen der Verbindungen der Formel 1 ≥ 2 ist.

5. Das magnetische Haftklebstoffflächengebilde gemäß einem der Ansprüche 1 bis 3, wobei das Silikon-Trennmittel durch die folgende Formel dargestellt wird:
(F¹ , F² , F³) - [(CH₃)₂ SiO]₅₆ Si(CH₃)₂-(F¹ , F² , F³)
wobei
F¹ für 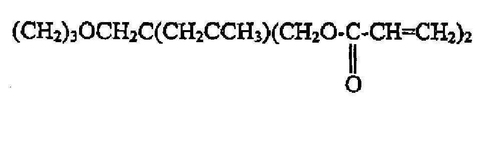 steht,
F² für 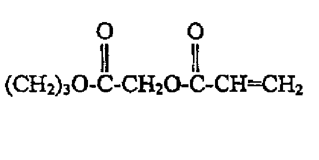 steht,
F³ für 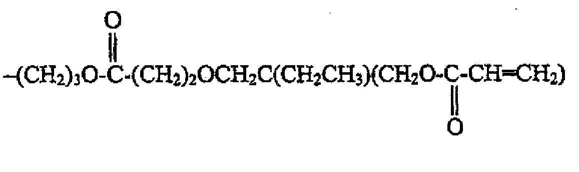 steht,
wobei F¹ die Hauptendgruppe ist und F² und F³ in Nebenbestandteilmenge vorhanden sind und wobei das Verhältnis der mittleren Anzahl von Dimethylsiloxangruppen zur mittleren Anzahl der Summe von (Meth)acrylatgruppen ungefähr 14:1 ist.

6. Der Haftklebstoffmagnet gemäß einem der Ansprüche 1 bis 5, wobei der Adhäsionspromotor durch die folgende Formel dargestellt wird:
(D¹,D²)-[(CH₃)₂SiO]₂₆Si(CH₃)₂-(D¹, D²),
wobei
D¹ für H₂C=CHCOOCH₂CH(OH)CH₂O(CH₂)₃- steht,
D² für HOCH₂C[(OOCCH=CH₂)H]CH₂O(CH₂)₃)- steht,
wobei D¹ und D² ungefähr in einem Verhältnis von 4:1 vorhanden sind; und wobei das Verhältnis der mittleren Anzahl von Dimethylsiloxangruppen -OSi(CH₃)₂- zur mittleren Anzahl der Summe von Acrylatgruppen ungefähr 13,0 ist.

7. Das magnetische Haftklebstoffflächengebilde gemäß einem der Ansprüche 1 bis 3, wobei die Trennmittelschicht das Produkt umfasst, welches erhalten wird durch Härten von
90 bis 60 Gewichtsprozent Silikon-Trennmittel;
10 bis 40 Gewichtsprozent Adhäsionspromotor; und
1 bis 4 Gewichtsprozent Adhäsionsverstärker.

8. Das magnetische Haftklebstoffflächengebilde gemäß einem der Ansprüche 1 bis 3, wobei die Trennmittelschicht das Produkt umfasst, welches erhalten wird durch Härten von
80 bis 65 Gewichtsprozent Silikon-Trennmittel;
20 bis 35 Gewichtsprozent Adhäsionspromotor; und
1,5 bis 3 Gewichtsprozent Adhäsionsverstärker.

9. Das magnetische Haftklebstoffflächengebilde gemäß einem der Ansprüche 1 bis 3, wobei die Trennmittelschicht das Produkt umfasst, welches erhalten wird durch Härten von
70 Gewichtsprozent Silikon-Trennmittel;
30 Gewichtsprozent Adhäsionspromotor; und
2 bis 3 Gewichtsprozent Adhäsionsverstärker.

10. Das magnetische Haftklebstoffflächengebilde gemäß einem der Ansprüche 1 bis 3, wobei die Trennmittelschicht das Reaktionsprodukt von
(i) einem oder mehr Polydialkylsiloxanen mit (Meth)acrylat-, Vinyl- und/oder Ethenylengruppen, wobei das Verhältnis der mittleren Anzahl von Dialkylsiloxaneinheiten zur mittleren Anzahl der Summe von (Meth)acrylat-, Vinyl- und Ethenylengruppen zwischen 10 und 17 liegt,
(ii) einem oder mehr Polydialkylsiloxanen mit (Meth)acryfat-, Vinyl- und/oder Ethenylengruppen, wobei die mittlere Anzahl von Dialkylsiloxaneinheiten zur mittleren Anzahl der Summe von (Meth)acrylat-, Vinyl- und Ethenylengruppen nicht höher als 5 ist, und/oder einer oder mehr organischen Verbindungen, welche frei von Silikon sind und mindestens zwei reaktive (Meth)acrylat-, Vinyl- und/oder Ethenylengruppen umfassen, und
(iii) einer wirksamen Menge von einem oder mehr Photoinitiatoren umfasst.

11. Das magnetische druckempfindliche Flächengebilde gemäß Anspruch 10, wobei die Menge von Verbindung (i) 5 bis 40 Gew.-% beträgt; und die Menge von Verbindung (ii) 95 bis 60 Gew.-% beträgt, wobei die Summe der Mengen von (i) und (ii) 100 Gew.-% beträgt.

12. Das magnetische Haftklebstoffflächengebilde gemäß einem der Ansprüche 1 bis 11, wobei die Trennmittelschicht in der Gegenwart eines Photoinitiators strahlengehärtet ist.

13. Das magnetische Haftklebstoffflächengebilde gemäß einem der Ansprüche 1 bis 12, wobei die Trennmittelschicht unter Verwendung von E-Strahl-Strahlung gehärtet ist.

14. Das magnetische Haftklebstoffflächengebilde gemäß einem der Ansprüche 1 bis 14, wobei das magnetische Substrat um einen Kern gewickelt ist.

15. Das magnetische Haftklebstoffflächengebilde gemäß einem der Ansprüche 1 bis 14, wobei das magnetische Material eine Vielzahl von Seltenerd-Partikeln umfasst und wobei das flexible magnetische Substrat aus einem flexiblen Matrixmaterial mit den Seltenerd-Partikeln eingebettet darin gebildet ist.

16. Das magnetische Haftklebstoffflächengebilde gemäß Anspruch 15, wobei das Matrixmaterial Gummi ist.

17. Das magnetische Haftklebstoffflächengebilde gemäß Anspruch 14, wobei der Kern rotierbar befestigt ist an einer Kartuschenkörperstruktur, weiche aufgebaut und angeordnet ist, um entfernbar befestigt zu sein an einem Verarbeitungsgerät mit kooperierenden Druckaufbringungsstrukturen, welche betriebsbereit sind, um Druck auf Substrate, welche dazwischen eingebracht werden, aufzubringen, um zu ermöglichen, dass der Anfangsteil abgewickelt und zwischen die Druckaufbringungsstrukturen des Verarbeitungsgeräts eingebracht wird;
wobei die Kartuschenkörperstruktur einen zweiten Kern und ein flexibles Schutzsubstrat, welches um den zweiten Kern gewickelt ist, umfasst, wobei der zweite Kern rotierbar an der Kartuschenkörperstruktur befestigt ist, um zu ermöglichen, dass ein Anfangsteil des Schutzsubstrats abgewickelt und zwischen die Druckaufbringungsstrukturen des Verarbeitungsgeräts zusammen mit dem flexiblen magnetischen Substrat eingebracht wird, so dass das Schutzsubstrat jedwede exponierten Teile der Klebstoffschicht bedeckt, um zu verhindern, dass die exponierten Teile mit den kooperierenden Druckaufbringungsstrukturen in Kontakt kommen.

18. Ein magnetisches Haftklebstoffflächengebilde gemäß Anspruch 14, wobei der Kern eine Befestigungsstruktur an den Enden davon aufweist, welche aufgebaut und angeordnet ist, um an einem Rahmen eines Verarbeitungsgeräts befestigt zu sein, wobei das Gerät kooperierende Druckaufbringungsstrukturen einschließt, welche betriebsbereit sind, um Druck auf Substrate, welche dazwischen eingebracht werden, aufzubringen.

19. Ein Verfahren zum Herstellen eines magnetischen druckempfindlichen Materials, wobei das Verfahren umfasst:
das Aufbringen einer Haftklebstoffschicht auf eine erste Hauptoberfläche eines flexiblen magnetischen Substrats;
das Beschichten einer Trennmittelschicht auf eine zweite Hauptoberfläche des flexiblen magnetischen Substrats;
das Härten der Trennmittelschicht; und
das Wickeln des flexiblen magnetischen Substrats zu einer Rolle, so dass die Klebstoffschicht direkt mit der Trennmittelschicht ineinandergreift;
wobei die Trennmittelschicht ein Gemisch ist, umfassend:
(i) ein Silikon-Trennmittel;
(ii) einen Adhäsionspromotor, welcher das Anhaften der Trennmittelschicht an der zweiten Hauptoberfläche des magnetischen Substrats fördert; und
(iii) einen Adhäsionsverstärker zur Stärkung der Kohäsion der Trennmittelschicht, wobei der Adhäsionsverstärker ein Gemisch von Methacrylatsäureester und trifunktionellem Säureester umfasst.

20. Ein Verfahren gemäß Anspruch 19, wobei die Trennmittelschicht unter Verwendung von Strahlung gehärtet ist.

21. Ein Verfahren gemäß Anspruch 20, wobei das Gemisch, welches die Trennmittelschicht umfasst, ferner einen Photoinitiator, welcher durch die Strahlung aktiviert wird, umfasst.

22. Ein Verfahren gemäß einem der Ansprüche 19 bis 21, wobei das Silikon-Trennmittel durch die folgende Formel dargestellt wird:
R¹R¹R²SiO(R¹R¹SiO)ₓ(R¹R²SiO)_{y}(R¹R¹SiO)_{z} SiR¹R¹R²
wobei:
R¹ unabhängig voneinander ein Alkylrest mit 1 bis 3 Kohlenstoffatomen ist,
R² unabhängig voneinander ein gegebenenfalls verzweigter Alkylrest mit 1 bis 20 Kohlenstoffatomen ist, wobei eine oder mehr CH₂-Gruppen ersetzt sein können mit 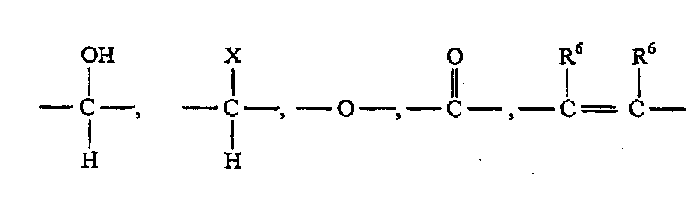 oder 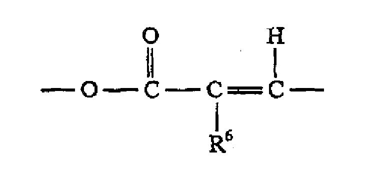 und wobei eine oder mehr CH₃-Gruppen ersetzt sein können mit 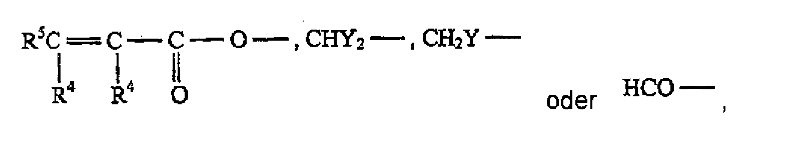 mit der Maßgabe, dass zwei Sauerstoffatome nicht direkt verbunden sind,
R⁴ unabhängig voneinander H oder CH₃ ist,
R⁵ unabhängig voneinander H oder ein gegebenenfalls verzweigter Alkylrest mit 1 bis 5 Kohlenstoffatomen ist,
R⁶ unabhängig voneinander H oder R¹ ist,
X unabhängig voneinander F oder Cl ist,
Y unabhängig voneinander F, Cl oder OH ist,
x für 0 oder eine Zahl von bis zu 200 steht,
y für 0 oder eine Zahl von bis zu 40 steht,
z für 0 oder eine Zahl von bis zu 200 steht,
mit der Maßgabe, dass 5 ≤ x + y + z ≤ 300 und die mittlere Anzahl der Summe von (Meth)acrylat-, Vinyl- und/oder Ethenylengruppen der Verbindungen der Formel I ≥ 2 ist.

23. Ein Verfahren gemäß einem der Ansprüche 20 bis 22, wobei das Silikon-Trennmittel durch die folgende Formel dargestellt wird:
(F¹ , F² , F³) - [(CH₃)₂ SiO]₅₆ Si(CH₃)₂ - (F¹ , F² , F³),
wobei
F¹ für 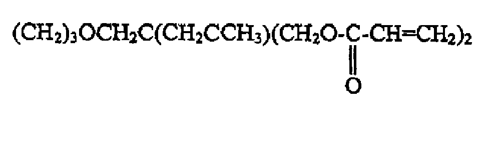 steht,
F² für 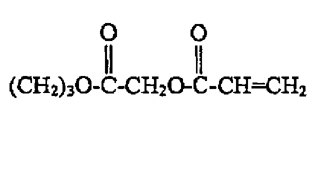 steht,
F³ für 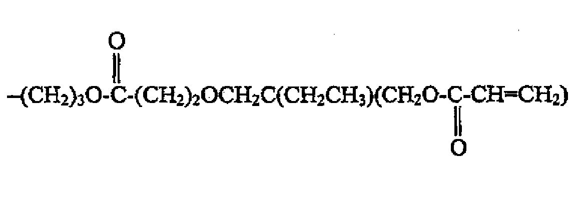 steht,
wobei F¹ die Hauptendgruppe ist und F² und F³ in Nebenbestandteilmengen vorhanden sind und wobei das Verhältnis der mittleren Anzahl von Dimethylsiloxangruppen zur mittleren Anzahl der Summe von (Meth)acrylatgruppen ungefähr 14:1 ist.

24. Ein Verfahren gemäß einem der Ansprüche 19 bis 23, wobei der Adhäsionspromotor durch die folgende Formel dargestellt wird:
(D¹,D²)-[(CH₃)₂SiO]₂₆Si(CH₃)₂(D¹, D²),
wobei
D¹ für H₂C=CHCOOCH₂CH(OH)CH₂O(CH₂)₃- steht,
D² für HOCH₂[(OOCCH=CH₂)H]CH₂O(CH₂)₃)- steht,
wobei D¹ und D² ungefähr in einem Verhältnis von 4:1 vorhanden sind; und wobei das Verhältnis der mittleren Anzahl von Dimethylsiloxangruppen -OSi(CH₃)₂- zur mittleren Anzahl der Summe von Acrylatgruppen ungefähr 13,0 ist.

25. Ein Verfahren gemäß einem der Ansprüche 19 bis 21, wobei die Trennmittelschicht das Produkt umfasst, welches erhalten wird durch Härten von 90 bis 60 Gewichtsprozent Silikon-Trennmittel;
10 bis 40 Gewichtsprozent Adhäsionspromotor; und
1 bis 4 Gewichtsprozent Adhäsionsverstärker.

26. Ein Verfahren gemäß einem der Ansprüche 19 bis 21, wobei die Trennmitteischicht das Produkt umfasst, welches erhalten wird durch Härten von 80 bis 65 Gewichtsprozent Silikon-Trennmittel;
20 bis 35 Gewichtsprozent Adhäsionspromotor; und
1,5 bis 3 Gewichtsprozent Adhäsionsverstärker.

27. Ein Verfahren gemäß einem der Ansprüche 19 bis 21, wobei die Trennmittelschicht das Produkt umfasst, welches erhalten wird durch Härten von 70 Gewichtsprozent Silikon-Trennmittel;
30 Gewichtsprozent Adhäsionspromotor; und
2 bis 3 Gewichtsprozent Adhäsionsverstärker.

28. Ein Verfahren gemäß Anspruch 19, wobei die Trennmittelschicht unter Verwendung von E-Strahl-Strahlung gehärtet ist.

## Revendications

1. Matériau en feuille magnétique à adhésif sensible à la pression, comprenant :
un substrat magnétique souple ayant une première surface principale et une deuxième surface principale,
une couche d'adhésif sensible à la pression sur la première surface principale ; et
une couche de libération sur la deuxième surface principale ;
dans lequel le substrat magnétique souple est enroulé en un rouleau de telle sorte que la couche adhésive vient directement en prise avec la couche de libération ;
dans lequel la couche de libération est un mélange durci comprenant :
(i) un agent antiadhésif à base de silicone ;
(ii) un promoteur d'adhésion favorisant l'adhérence de la couche de libération sur la deuxième surface principale du substrat magnétique ; et
(iii) un amplificateur d'adhésion pour renforcer la cohésion de la couche de libération, dans lequel l'amplificateur d'adhésion comprend un mélange d'ester d'acide méthacrylique et d'ester d'acide trifonctionnel.

2. Matériau en feuille magnétique à adhésif sensible à la pression selon la revendication 1, dans lequel le mélange constituant la couche de libération est durci par rayonnement.

3. Matériau en feuille magnétique sensible à la pression selon la revendication 2, dans lequel le mélange comprend en outre un photo-inducteur activé par le rayonnement.

4. Matériau en feuille magnétique à adhésif sensible à la pression selon l'une quelconque des revendications 1 à 3, dans lequel l'agent antiadhésif à base de silicone est représenté par la formule :
R¹R¹R²SiO(R¹R¹SiO)ₓ(R¹R²SiO)_{y}(R¹R²SiO)_{z}SiR¹R¹R²
dans laquelle :
R¹ indépendamment de chaque autre est un groupe alkyle ayant 1 à 3 atomes de carbone,
R² indépendamment de chaque autre est un groupe alkyle éventuellement ramifié avec 1 à 20 atomes de carbone dans lequel un ou plusieurs groupes CH₂ peuvent être remplacés par 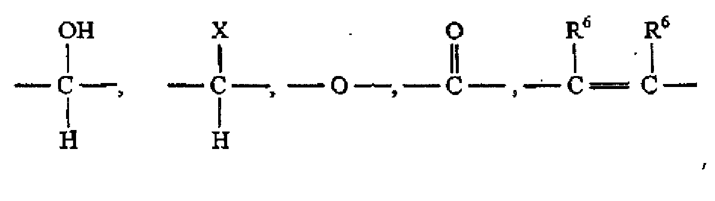 ou 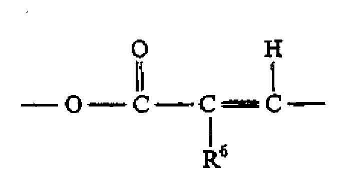 et dans lequel un ou plusieurs groupes CH₃ peuvent être remplacés par 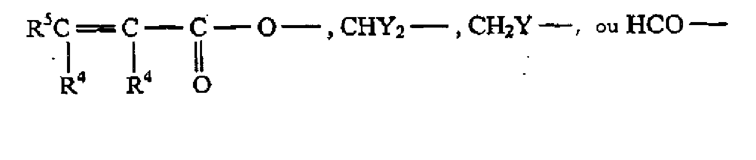 à condition que deux atomes d'oxygène ne soient pas directement liés,
R⁴ indépendamment de chaque autre est H ou CH₃,
R⁵ indépendamment de chaque autre est H ou un groupe alkyle éventuellement ramifié ayant 1 à 5 atomes de carbone,
R⁶ indépendamment de chaque autre est H ou R¹,
X indépendamment de chaque autre est F ou Cl,
Y indépendamment de chaque autre est F, Cl ou OH,
x est 0 ou un nombre jusqu'à 200,
y est 0 ou un nombre jusqu'à 40,
z est 0 ou un nombre jusqu'à 200,
à condition que 5 ≤ x + y + z ≤ 300 et que le nombre moyen de la somme des groupes (méth)acrylate, vinyle et/ou éthénylène des composés de formule I est ≥ 2.

5. Feuille magnétique à adhésif sensible à la pression selon l'une quelconque des revendications 1 à 3, dans lequel l'agent antiadhésif à base de silicone est représenté par la formule .
(F¹, F², F³)-[(CH₃)₂SiO]₅₆Si(CH₃)₂-(F¹, F², F³),
dans laquelle
F¹ est 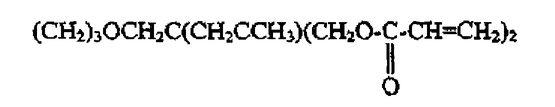
F² est 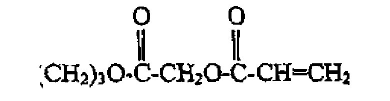
F³ est 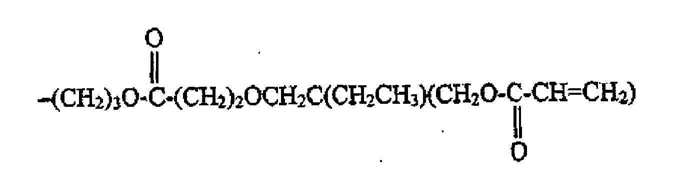
où F¹ est le groupe terminal principal et F² et F³ sont présents en quantité mineure, et dans laquelle le rapport du nombre moyen de groupes diméthylsiloxane sur le nombre moyen de la somme des groupes (méth)acrylate est approximativement 14 : 1.

6. Aimant à adhésif sensible à la pression selon l'une quelconque des revendications 1 à 5, dans lequel le promoteur d'adhésion est représenté par la formule :
(D¹,D²)-[(CH₃)₂SiO]₂₆Si(CH₃)₂-(D¹,D²)
où
D¹ est H₂C=CHCOOCH₂CH(OH)CH₂O(CH₂)₃-
D² est HOCH₂C[(OOCCH=CH₂)H]CH₂O(CH₂)₃)-
où D¹ et D² sont présents approximativement dans un rapport de 4 : 1 ;
et dans lequel le rapport du nombre moyen de groupes diméthylsiloxane -OSi(CH₃)₂- sur le nombre moyen de la somme de groupes est approximativement 13,0.

7. Feuille magnétique à adhésif sensible à la pression selon l'une quelconque des revendications 1 à 3, dans laquelle la couche de libération comprend le produit obtenu par durcissement
90 à 60 pour cent en poids d'agent antiadhésif à base de silicone ;
10 à 40 pour cent en poids de promoteur d'adhésion ; et
1 à 4 pour cent en poids d'amplificateur d'adhésion.

8. Feuille magnétique à adhésif sensible à la pression selon l'une quelconque des revendications 1 à 3, dans laquelle la couche de libération comprend le produit obtenu par durcissement
80 à 65 pour cent en poids d'agent antiadhésif à base de silicone ;
20 à 35 pour cent en poids de promoteur d'adhésion ; et
1,5 à 3 pour cent en poids d'amplificateur d'adhésion.

9. Feuille magnétique à adhésif sensible à la pression selon l'une quelconque des revendications 1 à 3, dans laquelle la couche de libération comprend le produit obtenu par durcissement
70 pour cent en poids d'agent antiadhésif à base de silicone ;
30 pour cent en poids de promoteur d'adhésion ; et
2 à 3 pour cent en poids d'amplificateur d'adhésion.

10. Feuille magnétique à adhésif sensible à la pression selon l'une quelconque des revendications 1 à 3, dans laquelle la couche de libération comprend le produit de réaction de
(i) un ou plusieurs polydialkylsiloxanes ayant des groupes (méth)acrylate, vinyle et/ou éthénylène dans laquelle le rapport du nombre moyen de motifs dialkylsiloxane sur le nombre moyen de la somme de groupes (méth)acrylate, vinyle et éthénylène est compris entre 10 et 17,
(ii) un ou plusieurs polydialkylsiloxanes ayant des groupes (méth)acrylate, vinyle et/ou éthénylène dans laquelle le nombre moyen de motifs dialkylsiloxane sur le nombre moyen de la somme de groupes (méth)acrylate, vinyle et éthénylène n'est pas plus de 5 et/ou un ou plusieurs composés organiques exempts de silicone et comprenant au moins deux groupes réactifs (méth)acrylate, vinyle et/ou éthénylène, et
(iii) une quantité efficace d'un ou plusieurs photo-inducteurs.

11. Feuille magnétique sensible à la pression selon la revendication 10, dans laquelle la quantité de composant (i) va de 5 à 40% en poids ; et la quantité de composant (ii) va de 95 à 60% en poids, dans laquelle la somme des quantités de (i) et (ii) est 100% en poids.

12. Feuille magnétique à adhésif sensible à la pression selon l'une quelconque des revendications 1 à 11, dans laquelle la couche de libération est durcie par rayonnement en présence d'un photo-inducteur.

13. Feuille magnétique à adhésif sensible à la pression selon l'une quelconque des revendications 1 à 12, dans laquelle la couche de libération est durcie en utilisant un rayonnement à faisceau d'électrons.

14. Feuille magnétique à adhésif sensible à la pression selon l'une quelconque des revendications 1 à 14, dans laquelle ledit substrat magnétique est enroulé autour d'un mandrin.

15. Feuille magnétique à adhésif sensible à la pression selon l'une quelconque des revendications 1 à 14, dans laquelle ledit matériau magnétique comprend une pluralité de particules de terres rares et dans laquelle ledit substrat magnétique souple est formé à partir d'un matériau de matrice souple ayant lesdites particules de terres rares imbriquées dedans.

16. Feuille magnétique à adhésif sensible à la pression selon la revendication 15, dans laquelle ledit matériau de matrice est du caoutchouc.

17. Feuille magnétique à adhésif sensible à la pression selon la revendication 14, dans laquelle
ledit mandrin est monté rotatif à une structure de corps de cartouche construite et disposé pour être monté de manière amovible à un appareil de traitement ayant des structures d'application de pression coopérantes pouvant être actionnées de manière à appliquer une pression à des substrats alimentés entre elles pour permettre à la partie de bord d'attaque d'être déroulée et alimentée entre les structures d'application de pression de l'appareil de traitement ;
ladite structure de corps de cartouche comprenant un deuxième mandrin et un substrat de protection souple enroulé autour dudit deuxième mandrin, ledit deuxième mandrin étant monté rotatif à ladite structure de corps de cartouche de façon à permettre à une partie de bord d'attaque dudit substrat de protection d'être déroulée et alimentée entre les structures d'application de pression de l'appareil de traitement en même temps que ledit substrat magnétique souple de sorte que ledit substrat de protection couvre n'importe quelles parties exposées de la couche adhésive pour empêcher lesdites parties exposées de venir en contact avec les structures d'application de pression coopérantes.

18. Feuille magnétique à adhésif sensible à la pression selon la revendication 14, dans laquelle ledit mandrin a une structure de montage à ses extrémités construite et disposée pour être montée à un bâti d'un appareil de traitement, l'appareil comprenant des structures d'application de pression coopérantes pouvant être actionnées de manière à appliquer une pression à des substrats alimentés entre elles.

19. Procédé pour fabriquer un matériau magnétique sensible à la pression, le procédé comprenant :
l'application d'une couche d'adhésif sensible à la pression sur une première surface principale d'un substrat magnétique souple ;
le revêtement d'une couche de libération sur une deuxième surface principale du substrat magnétique souple ;
le durcissement de la couche de libération ; et
l'enroulage du substrat magnétique souple en un rouleau de telle sorte que la couche adhésive vient directement en prise avec la couche de libération ;
dans lequel la couche de libération est un mélange comprenant :
(i) un agent antiadhésif à base de silicone ;
(ii) un promoteur d'adhésion favorisant l'adhérence de la couche de libération sur la deuxième surface principale du substrat magnétique ; et
(iii) un amplificateur d'adhésion pour renforcer la cohésion de la couche de libération, dans lequel l'amplificateur d'adhésion comprend un mélange d'ester d'acide méthacrylique et un ester d'acide trifonctionnel.

20. Procédé selon la revendication 19, dans lequel la couche de libération est durcie en utilisant un rayonnement.

21. Procédé selon la revendication 20, dans lequel le mélange constituant la couche de libération comprend en outre un photo-inducteur activé par le rayonnement.

22. Procédé selon l'une quelconque des revendications 19 à 21, dans lequel l'agent antiadhésif à base de silicone est représenté par la formule :
R¹R¹R²SiO(R¹R¹SiO)ₓ(R¹R²SiO)_{y}(R¹R²SiO)_{z}SiR¹R¹R²
dans laquelle :
R¹ indépendamment de chaque autre est un groupe alkyle ayant 1 à 3 atomes de carbone,
R² indépendamment de chaque autre est un groupe alkyle éventuellement ramifié avec 1 à 20 atomes de carbone dans lequel un ou plusieurs groupes CH₂ peuvent être remplacés par 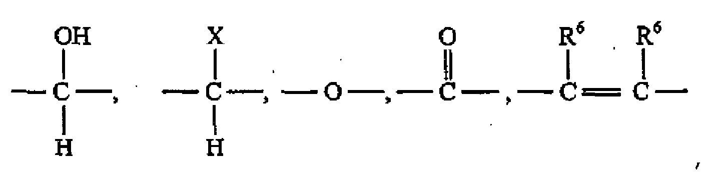 ou 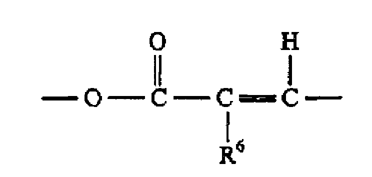 et dans lequel un ou plusieurs groupes CH₃ peuvent être remplacés par 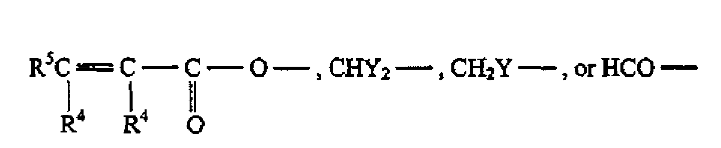 à condition que deux atomes d'oxygène ne soient pas directement liés,
R⁴ indépendamment de chaque autre est H ou CH₃,
R⁵ indépendamment de chaque autre est H ou un groupe alkyle éventuellement ramifié ayant 1 à 5 atomes de carbone,
R⁶ indépendamment de chaque autre est H ou R¹,
X indépendamment de chaque autre est F ou Cl,
Y indépendamment de chaque autre est F, Cl ou OH,
x est 0 ou un nombre jusqu'à 200,
y est 0 ou un nombre jusqu'à 40,
z est 0 ou un nombre jusqu'à 200,
condition que 5 ≤ x + y + z ≤ 300 et que le nombre moyen de la somme des groupes (méth)acrylate, vinyle et/ou éthénylène des composés de formule I est ≥ 2.

23. Procédé selon l'une quelconque des revendications 20 à 22, dans lequel l'agent antiadhésif à base de silicone est représenté par la formule :
(F¹, F², F³)-[(CH₃)₂SiO]₅₆Si(CH₃)₂-(F¹, F², F³),
dans laquelle
F¹ est 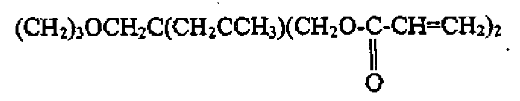
F² est 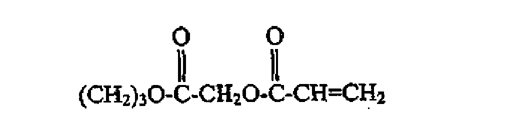
F³ est 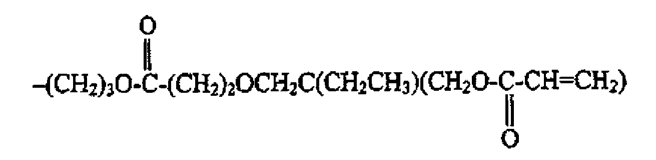
où F¹ est le groupe terminal principal et F² et F³ sont présents en quantité mineure, et dans laquelle le rapport du nombre moyen de groupes diméthylsiloxane sur le nombre moyen de la somme des groupes (méth)acrylate est approximativement 14:1.

24. Procédé selon l'une quelconque des revendications 19 à 23, dans lequel le promoteur d'adhésion est représenté par la formule :
(D¹,D²)-[(CH₃)₂SiO]₂₆Si(CH₃)₂-(D¹,D²)
où
D¹ est H₂C=CHCOOCH₂CH(OH)CH₂O(CH₂)₃-
D² est HOCH₂C[(OOCCH=CH₂)H]CH₂O(CH₂)₃)-
où D¹ et D² sont présents approximativement dans un rapport de 4 : 1 ;
et dans lequel le rapport du nombre moyen de groupes diméthylsiloxane -OSi(CH₃)₂- sur le nombre moyen de la somme de groupes est approximativement 13,0.

25. Procédé selon l'une quelconque des revendications 19 à 21, dans lequel la couche de libération comprend le produit obtenu par durcissement de
90 à 60 pour cent en poids d'agent antiadhésif à base de silicone ;
10 à 40 pour cent en poids de promoteur d'adhésion ; et
1 à 4 pour cent en poids d'amplificateur d'adhésion.

26. Procédé selon l'une quelconque des revendications 19 à 21, dans lequel la couche de libération comprend le produit obtenu par durcissement de
80 à 65 pour cent en poids d'agent antiadhésif à base de silicone ;
20 à 35 pour cent en poids de promoteur d'adhésion ; et
1,5 à 3 pour cent en poids d'amplificateur d'adhésion.

27. Procédé selon l'une quelconque des revendications 19 à 21, dans lequel la couche de libération comprend le produit obtenu par durcissement de
70 pour cent en poids d'agent antiadhésif à base de silicone ;
30 pour cent en poids de promoteur d'adhésion ; et
2 à 3 pour cent en poids d'amplificateur d'adhésion.

28. Procédé selon la revendication 19, dans lequel la couche de libération est durcie en utilisant un rayonnement à faisceau d'électrons.
